(19)

Europäisches
Patentamt
European
Patent Office
Office européen
des brevets

(11) **EP 4 550 221 A1**

(12) **EUROPEAN PATENT APPLICATION**

(43) Date of publication:
07.05.2025 Bulletin 2025/19

(21) Application number: 24209368.0

(22) Date of filing: 29.10.2024

(51) International Patent Classification (IPC):
*G06N 10/70* (2022.01)

(52) Cooperative Patent Classification (CPC):
G06N 10/70; G06N 10/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.10.2023 KR 20230147985

(71) Applicant: Korea University Research and
Business Foundation
Seoul 02841 (KR)

(72) Inventors:
• Kang, Yujin
02871 Seoul (KR)
• Lee, Jonghyun
13586 Seongnam-si (KR)
• Ha, Jinyoung
02853 Seoul (KR)
• Heo, Jun
06359 Seoul (KR)

(74) Representative: Noble, Frederick et al
Albright IP Limited
County House
Bayshill Road
Cheltenham, Glos. GL50 3BA (GB)

(54) **APPARATUS AND METHOD FOR LOGICAL OPERATION UTILIZING JOINT MEASUREMENT**

(57)    Disclosed is a method for a logical operation performed by a quantum computing device (100, Figure 1), which may include: placing a data patch (320) in which information is stored and computed, and a first ancilla patch (340) which is consumed during a logical operation at a predetermined first interval; placing a first logical ancilla qubit (350) between the data patch and the first ancilla patch; placing a second logical ancilla qubit (360) to have a predetermined distance from one side of the first ancilla patch; and performing a joint measurement utilizing the data patch and the first ancilla patch.

**Fig.3**

EP 4 550 221 A1

**Description**

**CROSS-REFERENCE TO RELATED APPLICATIONS**

This application claims priority to and the benefit of Korean Patent Application No. 10-2023-0147985 filed in the Korean Intellectual Property Office on 31 October 2023, the entire contents of which are incorporated herein by reference.

**TECHNICAL FIELD**

The present disclosure relates to a logical operation technology, and more particularly, to an apparatus and a method for a logical operation utilizing a joint measurement.

**BACKGROUND ART**

A quantum computing device may be a computing device that processes data by using phenomena related to quantum mechanics such as quantum entanglement, quantum superposition, etc. The quantum entanglement may mean a state in which two or more states are quantally connected to each other, so that they cannot be handled separately in each state. The quantum superposition may mean that various result states by measurement are simultaneously present probabilistically before measuring the quantum state. The quantum computing device can use a qubit as a basic unit of information for processing data by using a phenomenon related to the quantum dynamics.

The qubit may simultaneously express values corresponding to various bits by using the quantum superposition state. For example, the qubit may express respective values as probabilities such as '0 with a probability of 20% and 1 with a probability of 80%'. The qubit may be determined as one state while the quantum superposition state is released when being observed.

In order to overcome difficulty in implementing quantum computing and quantum information communication due to noise or an error for quantum information, a surface code and a concatenated code are being studied as a quantum error correcting code.

The surface code can have a larger threshold for an error rate requested for a physical qubit than the concatenated code in order for the quantum error correction code to efficiently operate, and can be utilized as the quantum error correction code in the future.

Proposed is a method of implementing a logical operation utilizing a joint measurement in a quantum computer architecture that encodes the physical qubit with the surface code. In addition, a study for efficiently implementing the logical operation utilizing the joint measurement is continued.

**SUMMARY OF THE INVENTION**

The present disclosure is contrived in response to the above-described background, and has been made in an effort to provide an apparatus and a method for a logical operation utilizing a joint measurement.

Technical objects of the present disclosure are not restricted to the technical object mentioned as above. Other unmentioned technical objects will be apparently appreciated by those skilled in the art by referencing the following description.

An exemplary embodiment of the present disclosure provides a method for a logical operation performed by a quantum computing device may include: placing a data patch in which information is stored and computed, and a first ancilla patch which is consumed during a logical operation at a predetermined first interval; placing a first logical ancilla qubit between the data patch and the first ancilla patch; placing a second logical ancilla qubit to have a predetermined distance from one side of the first ancilla patch; and performing a joint measurement utilizing the data patch and the first ancilla patch.

Optionally, the data patch may correspond to a first logical qubit in which a first physical qubit is encoded with a surface code, and the first ancilla patch may correspond to a second logical qubit in which a second physical qubit is encoded with the surface code.

Optionally, each of the first logical qubit and the second logical qubit may include a data qubit storing logical information, an X stabilizer formed at one side of the data qubit, and a Z stabilizer formed at one side of the data qubit.

Optionally, each of the X stabilizer and the Z stabilizer may include a measurement qubit.

Optionally, the performing of the joint measurement utilizing the data patch and the first ancilla patch may include performing a logical S operation in the data patch by performing a joint ZY measurement in the data patch and the first ancilla patch.

Optionally, the performing of the logical S operation in the data patch may include initializing the first ancilla patch to a 0 state, initializing the first logical ancilla qubit to a + state, initializing the second logical ancilla qubit to the 0 state, and

performing a joint ZY measurement in the data patch and the first ancilla patch by using a stabilizer between the data patch and the first ancilla patch.

Optionally, the performing of the joint measurement utilizing the data patch and the first ancilla patch may include performing a logical SH operation in the data patch by performing a joint XY measurement in the data patch and the first ancilla patch.

Optionally, the performing of the logical SH operation in the data patch may include initializing the first ancilla patch to the 0 state, initializing the second logical ancilla qubit to the 0 state, and performing a joint XY measurement in the data patch and the first ancilla patch utilizing the stabilizer between the data patch and the first ancilla patch.

Optionally, the performing of the joint measurement utilizing the data patch and the first ancilla patch may include placing a second ancilla patch at a location which is not duplicated with the first ancilla patch at a predetermined second interval from the data patch, placing a third logical ancilla qubit between the data patch and the second ancilla patch, and performing a logical T operation in the data patch by performing a joint ZZ and ZY measurement in the data patch, the first ancilla patch, and the second ancilla patch.

Optionally, the performing of the logical T operation in the data patch may include initializing the first ancilla patch to the 0 state, preparing the second ancilla patch in a predetermined magic state, initializing the first logical ancilla qubit and the third logical ancilla qubit to a + state, initializing the second logical ancilla qubit to the 0 state, and performing the joint ZZ & ZY measurement to the data patch, the first ancilla patch, and the second ancilla patch by using the stabilizer between the data patch and the first ancilla patch and a stabilizer between the data patch and the second ancilla patch.

Another exemplary embodiment of the present disclosure provides a non-transitory computer-readable medium including a computer program, wherein the computer program allows a quantum computing device to perform a method for a logical operation, in which the method may include: placing a data patch in which information is stored and computed, and a first ancilla patch which is consumed during a logical operation at a predetermined first interval; placing a first logical ancilla qubit between the data patch and the first ancilla patch; placing a second logical ancilla qubit to have a predetermined distance from one side of the first ancilla patch; and performing a joint measurement utilizing the data patch and the first ancilla patch.

Yet another exemplary embodiment of the present disclosure provides a quantum computing device for a logical operation, including: a processor; and a memory, in which the processor may perform an operation of placing a data patch in which information is stored and computed, and a first ancilla patch which is consumed during a logical operation at a predetermined first interval, an operation of placing a first logical ancilla qubit between the data patch and the first ancilla patch, an operation of placing a second logical ancilla qubit to have a predetermined distance from one side of the first ancilla patch, and an operation of performing a joint measurement utilizing the data patch and the first ancilla patch.

According to an exemplary embodiment of the present disclosure, S, T, and SH operations can be performed with small lost utilizing joint ZY and XY measurements.

Effects which can be acquired in the present disclosure are not limited to the aforementioned effects and other unmentioned effects will be clearly understood by those skilled in the art from the following description.

## BRIEF DESCRIPTION OF THE DRAWINGS

Various aspects are now described with reference to the drawings and like reference numerals are generally used to designate like elements. In the following exemplary embodiments, for purposes of explanation, numerous specific details are set forth to provide a comprehensive understanding of one or more aspects. However, it will be apparent that the aspect(s) can be executed without the detailed matters.

FIG. 1 is a block diagram of a quantum computing device for providing a logical operation according to an exemplary embodiment of the present disclosure.

FIG. 2 is a diagram illustrating a logical operation performed by the quantum computing device according to an exemplary embodiment of the present disclosure.

FIG. 3 is a diagram illustrating a logical qubit encoded with a surface code and a patch corresponding thereto according to an exemplary embodiment of the present disclosure.

FIG. 4 is a diagram illustrating a parity measurement circuit and an execution order of an X stabilizer and a Z stabilizer according to an exemplary embodiment of the present disclosure.

FIG. 5 is a diagram illustrating a joint ZY measurement process and a parity measurement circuit of a 4-qubit twist defect according to an exemplary embodiment of the present disclosure.

FIG. 6 is a diagram illustrating a joint XY measurement process and the parity measurement circuit of the 4-qubit twist defect according to an exemplary embodiment of the present disclosure.

FIG. 7 is a diagram illustrating a parity measurement circuit utilizing two measurement qubits in the 4-qubit twist defect according to an exemplary embodiment of the present disclosure.

FIG. 8 is a diagram illustrating joint ZZ & ZY measurement processes according to an exemplary embodiment of the present disclosure.

FIG. 9 is a diagram illustrating a logical S operation performing process according to an exemplary embodiment of the present disclosure.

FIG. 10 is a diagram illustrating a change of a stabilizer upon performing a logical S operation according to an exemplary embodiment of the present disclosure.

FIG. 11 is a diagram illustrating a logical SH operation performing process according to an exemplary embodiment of the present disclosure.

FIG. 12 is a diagram illustrating a logical T operation performing process according to an exemplary embodiment of the present disclosure.

FIG. 13 is a diagram illustrating a logical Hadamard operation implementation method utilizing boundary flip and transform of a subsequent measurement according to an exemplary embodiment of the present disclosure.

FIG. 14 is a diagram illustrating a physical CNOT execution order according to the boundary flip in an exemplary embodiment of the present disclosure.

FIG. 15 is a diagram illustrating changes in logical X and Z due to boundary inversion in an exemplary embodiment of the present disclosure.

FIG. 16 is a diagram illustrating a process of performing the joint measurement performed when an operation subsequent to a logical Hadamard operation is a logical CNOT operation in an exemplary embodiment of the present disclosure.

FIG. 17 is a diagram illustrating a process of performing the joint measurement performed when the operation subsequent to the logical Hadamard operation is a logical S operation in an exemplary embodiment of the present disclosure.

FIG. 18 is a diagram illustrating a process of performing the joint measurement performed when an operation subsequent to the logical Hadamard operation is a logical T operation in an exemplary embodiment of the present disclosure.

FIG. 19 is a diagram illustrating a measurement performed when the operation subsequent to the logical Hadamard operation is a single measurement in an exemplary embodiment of the present disclosure.

FIG. 20 is a normal schematic view of an exemplary computing environment in which the exemplary embodiments of the present disclosure may be implemented.

## DETAILED DESCRIPTION

Various exemplary embodiments will now be described with reference to drawings. In this specification, various descriptions are presented to provide appreciation of the present disclosure. However, it is apparent that the exemplary embodiments can be executed without the specific description.

"Component", "module", "system", and the like which are terms used in the specification refer to a computer-related entity, hardware, firmware, software, and a combination of the software and the hardware, or execution of the software. For example, the component may be a processing executed on a processor, the processor, an object, an execution thread, a program, and/or a computer, but is not limited thereto. For example, both an application executed in a computing device and the computing device may be the components. One or more components may reside within the processor and/or an execution thread. One component may be localized in one computer. One component may be distributed between two or more computers. Further, the components may be executed by various computer-readable media having various data structures, which are stored therein. The components may perform communication through local and/or remote processing according to a signal (for example, data transmitted from another system through a network such as the Internet through data and/or a signal from one component that interacts with other components in a local system and a distribution system) having one or more data packets, for example.

In addition, the term "or" is intended to mean not exclusive "or" but implicit "or". That is, when not separately specified or not clear in terms of a context, a sentence "X uses A or B" is intended to mean one of the natural inclusive replacements. That is, the sentence "X uses A or B" may be applied to any of the case where X uses A, the case where X uses B, or the case where X uses both A and B. Further, it should be understood that the term "and/or" used in this specification designates and includes all available combinations of one or more items among enumerated related items.

Further, it should be appreciated that the term "comprise" and/or "comprising" means presence of corresponding features and/or components. However, it should be appreciated that the term "comprises" and/or "comprising" means that presence or addition of one or more other features, components, and/or a group thereof is not excluded. Further, when not separately specified or it is not clear in terms of the context that a singular form is indicated, it should be construed that the singular form generally means "one or more" in this specification and the claims.

In addition, the term "at least one of A or B" should be interpreted to mean "a case including only A", "a case including only B", and "a case in which A and B are combined".

Those skilled in the art need to recognize that various illustrative logical blocks, configurations, modules, circuits, means, logic, and algorithm steps described in connection with the exemplary embodiments disclosed herein may be additionally implemented as electronic hardware, computer software, or combinations of both sides. To clearly illustrate the interchangeability of hardware and software, various illustrative components, blocks, configurations, means, logic, modules, circuits, and steps have been described above generally in terms of their functionalities. Whether the functionalities are implemented as the hardware or software depends on a specific application and design restrictions given to an entire system. Skilled artisans may implement the described functionalities in various ways for each particular application. However, such implementation decisions should not be interpreted as causing a departure from the scope of the present disclosure.

The description of the presented exemplary embodiments is provided so that those skilled in the art of the present disclosure use or implement the present disclosure. Various modifications to the exemplary embodiments will be apparent to those skilled in the art. Generic principles defined herein may be applied to other exemplary embodiments without departing from the scope of the present disclosure. Therefore, the present disclosure is not limited to the exemplary embodiments presented herein. The present disclosure should be analyzed within the widest range which is coherent with the principles and new features presented herein.

In the present disclosure, terms represented by N-th such as first, second, or third are used for distinguishing at least one entity. For example, entities expressed as first and second may be the same as each other or different from each other.

In addition, the term "etc." such as "A, B, etc." should be interpreted to mean "a case including only A", "a case including only B", and "a case in which A and B are combined".

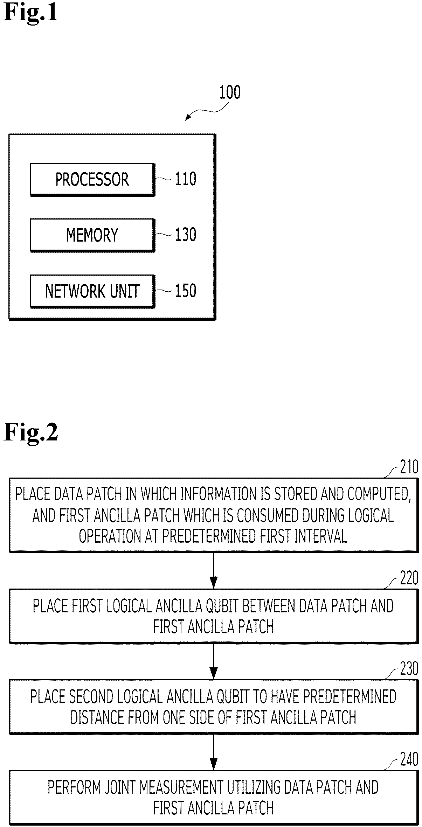

FIG. 1 is a block diagram of a quantum computing device for providing a logical operation according to an exemplary embodiment of the present disclosure.

A configuration of the quantum computing device illustrated in FIG. 1 is only an example shown through simplification. In an exemplary embodiment of the present disclosure, the quantum computing device may include other components for providing a logical operation, and only some of the disclosed components may also constitute the quantum computing device.

Referring to FIG. 1, the quantum computing device 100 may perform the logical operation utilizing a joint measurement.

The quantum computing device 100 may include a processor 110, a memory 130, and a network unit 150. The processor 110 may be constituted by one or more cores and may include processors for data analysis and quantum processing, which include a central processing unit (CPU), a general purpose graphics processing unit (GPGPU), a tensor processing unit (TPU), and the like of the computing device. The processor 110 may generally control an overall operation of the quantum computing device 100. For example, the processor 110 may process signals, data information, etc., input or output through components included in the quantum computing device 100. As another example, the processor 110 may read a computer program stored in the memory 130 to perform the quantum processing according to an exemplary embodiment of the present disclosure. The processor 110 may perform a calculation by using quantum mechanical physical phenomena such as indexing information expression of quantum superposition and a parallel operation using quantum entanglement.

According to some exemplary embodiments of the present disclosure, the memory 130 may store any type of information generated or determined by the processor 110 or any type of information received by the network unit 150.

According to some exemplary embodiments of the present disclosure, the memory 130 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The quantum computing device 100 may operate in connection with a web storage performing a storing function of the memory 130 on the Internet. The description of the memory is just an example and the present disclosure is not limited thereto. The network unit 150 according to some exemplary embodiments of the present disclosure may include an arbitrary wired/wireless communication network that may transmit/receive arbitrary type data and signals. The techniques described in this specification may also be used in other networks in addition to the aforementioned networks.

FIG. 2 is a diagram illustrating a logical operation performed by the quantum computing device according to an exemplary embodiment of the present disclosure.

Steps illustrated in FIG. 2 are exemplary steps. Therefore, it will also be apparent to those skilled in the art that some of the steps of FIG. 2 may be omitted or there may be additional steps within a range without departing from a spirit scope of the present disclosure. Further, specific contents regarding the components (e.g., the quantum computing device 100, etc.) disclosed in FIG. 2 may be replaced with the contents described through FIG. 1 above. The steps and performing processes illustrated in FIGS. 2 to 19 may be performed by, for example, the quantum computing device 100.

In the present disclosure, specific methodologies and definitions related to lattice surgery and the j oint measurement are disclosed in a thesis and the thesis (Horsman, C., Fowler, A.G., Devitt, S., Van Meter, R.: Surface code quantum computing by lattice surgery. New Journal of Physics 14(12), 123011 (2012)) is incorporated herein by reference.

In the present disclosure, a logical qubit in which a physical qubit is encoded with the surface code may perform any quantum circuit desired by a user to be fault-tolerant (that is, while correcting the error) through at least one quantum gate (e.g., a logical-unit universal gate set, etc.). The universal gate set may include Pauli, CNOT, Hadamard(H), and Phase(S) operations as a Clifford operation, and a Phase(T) operation which is non-Clifford operation.

In the present disclosure, the quantum circuit may include at least one qubit, at least one quantum gate acting on at least one qubit, and/or a measurement.

In the present disclosure, the qubit (e.g., a physical qubit, a logical qubit, etc.) may be a basic unit of information for processing data using a phenomenon related to quantum mechanics. The qubit may simultaneously express values corresponding to various bits by using the quantum superposition state. For example, the qubit may express respective values as probabilities such as '0 with a probability of 20% and 1 with a probability of 80%'. The qubit may be determined as one state while the quantum superposition (entangled) state is released when being measured (observed). For example, the qubit starts in a basis state indicating a state of $|0\rangle$ or $|1\rangle$, and may show a state changed by a quantum gate. In addition, the qubit may be determined as the state of $|0\rangle$ or $|1\rangle$ when being measured (observed). The qubit may be expressed by a 2-dimensional vector.

In the present disclosure, the quantum computing device 100 may initialize the qubit or prepare the qubit in a specific state by using various methods (e.g., using the quantum gate, etc.).

In the present disclosure, at least one quantum gate may be an element indicating an operation applied to the qubit in the quantum computer. At least one quantum gate may convert the quantum state of the qubit.

At least one quantum gate may be operated by a matrix multiplication of complex vectors. At least one quantum gate may include a Hadamard gate, a Pauli gate, a Phase shift gate (e.g., an S gate, a T gate, etc.), a CNOT gate, etc. The Hadamard gate may be a gate that makes the state of the qubit which is the state of $|0\rangle$ or $|1\rangle$ into a superposition state in which $|0\rangle$ and $|1\rangle$ are simultaneously present. A logic symbol of the Hadamard gate may be ⎯$\boxed{H}$⎯ in the quantum circuit. A matrix equation of the Hadamard gate may be $\frac{1}{\sqrt{2}}\begin{bmatrix} 1 & 1 \\ 1 & -1 \end{bmatrix}$ . A Hadamard operation H may be an operation that converts an X basis into a Z basis. Further, the Hadamard operation H may be an operation that converts the Z basis into the X basis.

The Phase shift gate may be a gate that changes a phase of the qubit. The Phase shift gate may include an S gate, a T gate, etc.

The S gate may be a gate that performs an operation of bringing a phase change of 90 degrees to the qubit. A logic symbol of the S gate may be ⎯$\boxed{S}$⎯ in the quantum circuit. A matrix equation of the S gate may be $\begin{bmatrix} 1 & 0 \\ 0 & i \end{bmatrix}$ . i may be the imaginary unit.

$S^\dagger$ An $S^\dagger$ gate may be a gate that exchanges a row and a column of the matrix in the S gate. A logic symbol of the $S^\dagger$ gate may be ⎯$\boxed{S^\dagger}$⎯ in the quantum circuit.

The T gate may be a gate that performs an operation of bringing a phase change of 45 degrees to the qubit. A logic symbol of the T gate may be ⎯$\boxed{T}$⎯ in the quantum circuit. A matrix equation of the T gate may be $\begin{bmatrix} 1 & 0 \\ 0 & e^{i\pi/4} \end{bmatrix}$ . i may be the imaginary unit. $e^{i\pi/4}$ as a complex number calculated according to the Euler's formula may be a complex number corresponding to an angle of 45 degrees on a complex plane.

The CNOT gate may be a gate that makes two qubits to the entangled state.

The CNOT gate may be a gate that performs a NOT gate operation for a second qubit (target qubit) when a first qubit (control qubit) is $|1\rangle$. A logic symbol of the CNOT gate may be $\oplus$ in the quantum circuit. ● may be the control qubit and ⊕ may be the target qubit. A matrix equation of the CNOT gate may be $\begin{bmatrix} 1 & 0 & 0 & 0 \\ 0 & 1 & 0 & 0 \\ 0 & 0 & 0 & 1 \\ 0 & 0 & 1 & 0 \end{bmatrix}$ .

The measurement may be a process of separating the state of the qubit into one of the basis states, and obtaining a measurement result through the separated state. For example, the processor 110 performs the measurement for the state of the qubit in the X or Z basis state in the quantum circuit to obtain the state of $|0\rangle$ or $|1\rangle$. When the measured state of the qubit is the state of $|0\rangle$, the processor 110 may determine the corresponding state as 0 as a classical bit. When the measured state of the qubit is the state of $|1\rangle$, the processor 110 may determine the corresponding state as 1 as the classical bit. A symbol of the measurement may be ⌐⌐ in the quantum circuit.

In the present disclosure a symbol d may mean a distance of the surface code. In the present disclosure, $|0\rangle$ may represent a physical qubit which is in a 0 state.

In the present disclosure, $|-\rangle$ may represent a physical qubit which is in a + state.

In the present disclosure, $|0\rangle_L$ may represent a physical qubit which is in the 0 state.

In the present disclosure, $|+\rangle_L$ may represent a physical qubit which is in the + state.

In the present disclosure, $|Y\rangle_L$ may represent a magic state used in the S operation. For example, $|Y\rangle_L$ may be

$$(|0\rangle + i|1\rangle)/\sqrt{2}.$$

In the present disclosure, $|A\rangle_L$ may represent a magic state used in the T operation. For example, $|A\rangle_L$ may be

$$(|0\rangle + e^{i\pi/4}|1\rangle)/\sqrt{2}.$$

In the present disclosure, a time cost may mean the number of surface code cycles used for the operation in order to correct a measurement error.

In the present disclosure, a space cost may mean the number of physical qubits used for performing the operation.

In the present disclosure, a space-time cost may mean a product of the space cost and the time cost.

According to an exemplary embodiment of the present disclosure, the processor 110 of the quantum computing device 100 may arrange a data patch in which information is stored and computed, and a first ancilla patch consumed during a logical operation process at a predetermined first interval.

The predetermined first interval is not limited to a specific value, and may be variously set according to a situation.

The data patch may correspond to a first logical qubit in which a first physical qubit is encoded with the surface code.

The first ancilla patch may correspond to a second logical qubit in which a second physical qubit is encoded with the surface code.

Each of the first logical qubit and the second logical qubit may include a data qubit storing logical information, an X stabilizer formed at one side of the data qubit, and a Z stabilizer formed at the other side of the data qubit.

The stabilizer may be a group of a series of quantum operators (Hermit operators) that describe a state of a quantum bit. The group of the quantum operators may be used to represent the state of the quantum bit in a quantum state space.

The X stabilizer may mean a quantum operator group including an X operator. The X operator may be an operator that rotates the state of the qubit around an X axis. The X operator may perform an operation of inverting the state of the qubit.

The Z stabilizer may mean a quantum operator group including a Z operator. The Z operator may be an operator that rotates the state of the qubit around a Z axis.

The Z operator may perform an operation of changing the state of the qubit.

Each of the X stabilizer and the Z stabilizer may include a measurement qubit.

The processor 110 may arrange a first logical ancilla qubit between the data patch and the first ancilla patch (220).

The processor 110 may arrange a second logical ancilla qubit to have a predetermined distance from one side of the first ancilla patch (230). The predetermined distance is not limited to a specific value, and may be variously set according to a situation.

In the present disclosure, a logical ancilla qubit (e.g., a first logical ancilla qubit, a second logical ancilla qubit, a third logical ancilla qubit, etc.) may be a qubit added to achieve a specific target in calculation. For example, the logical ancilla qubit may be a qubit placed for the logical operation.

The processor 110 may perform the joint measurement by using the data patch and the first ancilla patch (240).

As described above, specific methodologies and definitions related to the joint measurement are disclosed in a thesis and the thesis (Horsman, C. Fowler, A.G., Devitt, and S. Van Meter, R.: Surface code quantum computing by lattice surgery. New Journal of Physics 14(12), 123011 (2012)) is incorporated herein by reference.

In an exemplary embodiment, the processor 110 may perform a logical S operation in the data patch by performing a joint ZY measurement in the data patch and the first ancilla patch. For example, the processor 110 may initialize the first ancilla patch to the 0 state. The processor 110 may initialize the first logical ancilla qubit to the + state. The processor 110 may initialize the second logical ancilla qubit to the 0 state. The processor 110 may perform the joint ZY measurement to the data patch and the first ancilla patch by using the stabilizer between the data patch and the first ancilla patch.

In an exemplary embodiment, the processor 110 may perform a logical SH operation in the data patch by performing a joint XY measurement in the data patch and the first ancilla patch. For example, the processor 110 may initialize the first ancilla patch to the 0 state. The processor 110 may initialize the second logical ancilla qubit to the 0 state. The processor 110 may perform the joint XY measurement to the data patch and the first ancilla patch by using the stabilizer between the data patch and the first ancilla patch.

In an exemplary embodiment, the processor 110 may place a second ancilla patch at a location which is not duplicated with the first ancilla patch at a predetermined second interval from the data patch.

The processor 110 may arrange a third logical ancilla qubit between the data patch and the second ancilla patch.

The processor 110 may perform a logical T operation in the data patch by performing a joint ZZ & ZY measurement in the data patch, the first ancilla patch, and the second ancilla patch.

For example, the processor 110 may initialize the first ancilla patch to the 0 state. The processor 110 may prepare the second ancilla patch in a predetermined magic state. The predetermined magic state may be $|A\rangle_L$. The processor 110 may initialize the first logical ancilla qubit and the third logical ancilla qubit to the + state. The processor 110 may initialize the second logical ancilla qubit to the 0 state. The processor 110 may perform the joint ZZ & ZY measurement to the data patch, the first ancilla patch, and the second ancilla patch by using 'the stabilizer between the data patch and the first ancilla patch' and 'the stabilizer between the data patch and the second ancilla patch'.

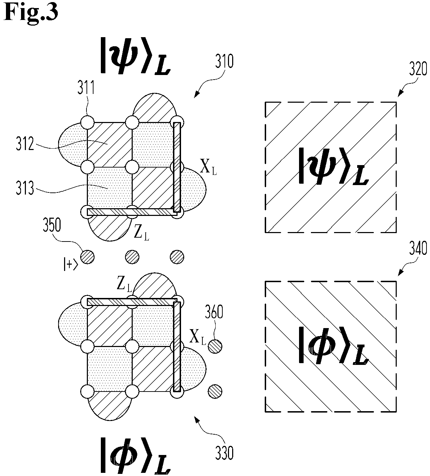

Hereinafter, a detailed description of the configuration, step, etc., described above with reference to FIG. 2 above will be made with reference to FIGS. 3 to 12.

FIG. 3 is a diagram illustrating a logical qubit encoded with a surface code and a patch corresponding thereto according to an exemplary embodiment of the present disclosure.

Referring to FIG. 3, a data qubit 311 may store logical information in a first logical qubit 310 and a second logical qubit 330 which are in any state. A first logical ancilla qubit 350 and a second logical ancilla qubit 360 may be qubits consumed during a lattice surgery process. An X stabilizer 312 and a Z stabilizer 313 may be present around one data qubit 311. One measurement qubit may be included in each stabilizer, and is omitted in FIG. 3. FIG. 3 illustrates a logical qubit in which a distance is 3, and the logical X or Z operator is defined as an XXX operation or ZZZ operation in three qubits, and is represented by a thick solid line. The data patch 320 may be generated by representing the first logical qubit 310 in a patch form. The first ancilla patch 340 may be generated by representing the second logical qubit in the patch form. The data patch 320 may perform at least one of storing and/or computing information desired by the user. The first ancilla patch 340 may be consumed during a logical operation process.

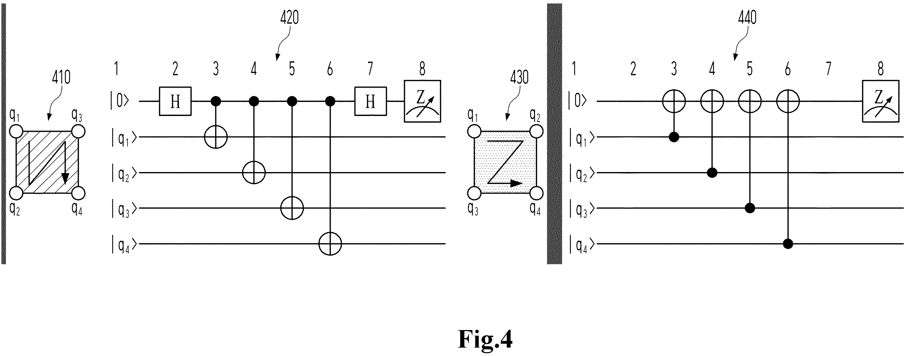

FIG. 4 is a diagram illustrating a parity measurement circuit and an execution order of an X stabilizer and a Z stabilizer according to an exemplary embodiment of the present disclosure.

Referring to FIG. 4, a performing order of a circuit may be from the top to the bottom in an X stabilizer 410. The performing order of the circuit in the X stabilizer 410 may be an order marked with an arrow in the X stabilizer 410. The performing order of the circuit in the Z stabilizer 430 may be from the left to the right. The performing order of the circuit in a Z stabilizer 430 may be an order marked with an arrow in the Z stabilizer 430.

Performing each of a parity measurement circuit 420 of the X stabilizer and a parity measurement circuit 440 of the Z stabilizer may be completed within 8 steps including a process of initializing the measurement qubit to $|0\rangle$. A time required for an operation of the circuit to be completed may be defined as one surface code cycle. A parity of the stabilizer may have a value of +1 or -1 according to a Z basis measurement result of the measurement qubit. When the parity of the stabilizer has the value of +1 according to the measurement result, the quantum computing device 100 may determine the case as the 0 state. When the parity of the stabilizer has the value of -1 according to the measurement result, the quantum computing device 100 may determine the case as the 1 state.

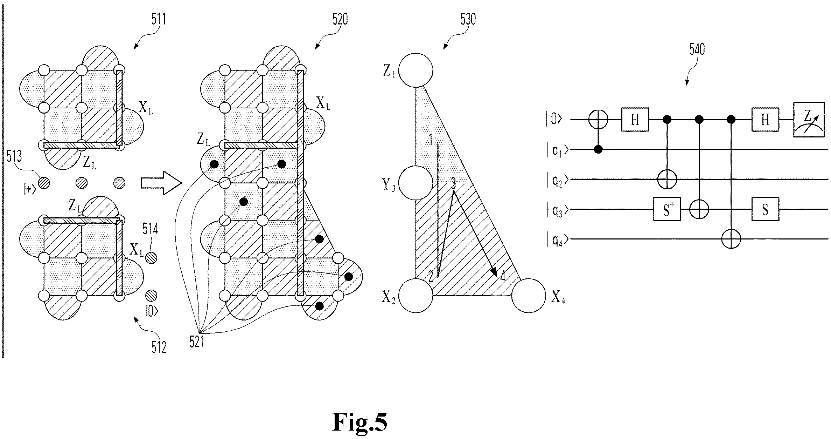

FIG. 5 is a diagram illustrating a joint ZY measurement process and the parity measurement circuit of the 4-qubit twist defect according to an exemplary embodiment of the present disclosure.

Referring to FIG. 5, the quantum computing device 100 may initialize a first logical ancilla qubit 513 to $|+\rangle$ when there are a first logical qubit 511 and a second logical qubit 512 which are in any state. The quantum computing device 100 may initialize a second logical ancilla qubit 514 to $|0\rangle$.

The quantum computing device 100 may generate an integrated logical qubit 520 by turning on (activating) a stabilizer between the first logical qubit 511 and the second logical qubit 512. The quantum computing device 100 may perform the joint ZY measurement in the first logical qubit 511 and the second logical qubit 512 by using the integrated logical qubit 520. The quantum computing device 100 multiplies all parities of a stabilizer 521 that determines a joint ZY measurement result among newly operating stabilizers to acquire a result of the joint ZY measurement. The parities of the stabilizer 521 may be acquired by using a parity measurement circuit 540 corresponding to the execution order. In order to complement the measurement error, a total of 1d cycle may be consumed for the joint ZY measurement. The stabilizer 521 that determines the joint ZY measurement result may be predetermined.

A 4-qubit twist defect 530 may be a stabilizer in which X, and Z and Y are mixed. An execution order of a measurement circuit of the 4-qubit twist defect 530 may be represented with the arrow in the 4-qubit twist defect 530.

The execution order of the measurement circuit of the 4-qubit twist defect 530 may be predetermined by considering an order of surrounding X and Z stabilizers.

Since the parity measurement circuit 540 is completed within 8 steps, a less time may be required than a parity measurement circuit of a 5-qubit twist defect proposed in a conventional thesis (Litinski, Daniel, and Felix von Oppen. "Lattice surgery with a twist:, simplifying clifford gates of surface codes." Quantum 2 (2018): 62.).

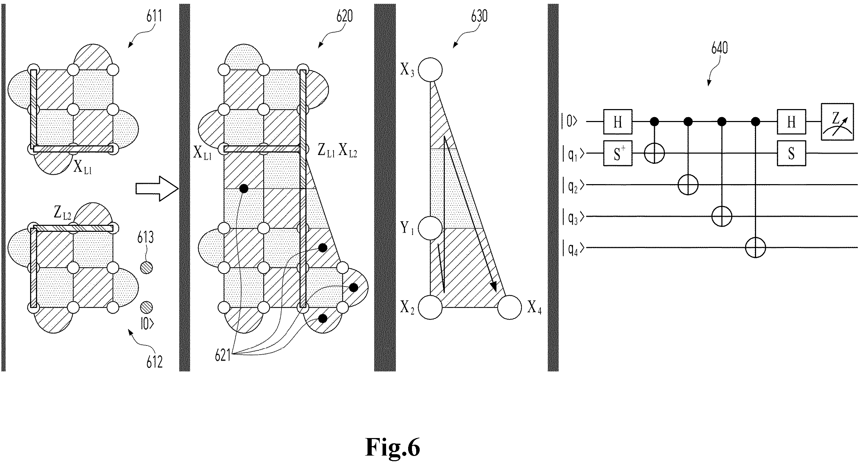

FIG. 6 is a diagram illustrating a joint XY measurement process and the parity measurement circuit of the 4-qubit twist defect according to an exemplary embodiment of the present disclosure.

The quantum computing device 100 may initialize a second logical ancilla qubit 613 to $|0\rangle$ when there are a first logical qubit 611 and a second logical qubit 612 which are in any state.

The quantum computing device 100 may generate an integrated logical qubit 620 by turning on (activating) a stabilizer between the first logical qubit 611 and the second logical qubit 612. The quantum computing device 100 may perform the joint XY measurement in the first logical qubit 611 and the second logical qubit 612 by using the integrated logical qubit 620. The quantum computing device 100 multiplies all parities of a stabilizer 621 that determines a joint XY measurement result among newly operating stabilizers to acquire a result of the joint XY measurement. The parities of the stabilizer 621 may be acquired by using a parity measurement circuit 640 corresponding to the execution order. In order to complement the measurement error, a total of 1d cycle may be consumed for the joint XY measurement. The stabilizer 621 that determines the joint XY measurement result may be predetermined.

A 4-qubit twist defect 630 may be a stabilizer in which X, and Z and Y are mixed. An execution order of a measurement circuit of the 4-qubit twist defect 630 may be represented by the arrow within the 4-qubit twist defect 630. The execution order of the measurement circuit of the 4-qubit twist defect 630 may be predetermined by considering an order of surrounding X and Z stabilizers.

Since the parity measurement circuit 640 is completed within 8 steps, a less time may be required than a parity measurement circuit of a 5-qubit twist defect proposed in a conventional thesis (Litinski, Daniel, and Felix von Oppen. "Lattice surgery with a twist: simplifying clifford gates of surface codes." Quantum 2 (2018): 62.).

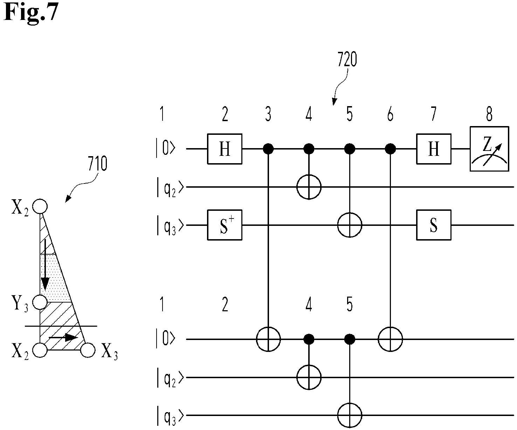

FIG. 7 is a diagram illustrating a parity measurement circuit utilizing two measurement qubits in the 4-qubit twist defect according to an exemplary embodiment of the present disclosure.

FIG. 7 may illustrate a method of performing the parity measurement circuit by utilizing two measurement qubits when a distance of physical CNOT from the 4-qubit twist defect of FIG. 6 is large. A circuit at an upper end in a parity measurement circuit 720 may be a circuit for two qubits $X_2$ and $Y_3$ at a left side in a 4-qubit twist defect 710. A circuit at a lower end is a circuit for two qubits $X_2$ and $X_3$ at a lower end (below the qubit $Y_3$) in the 4-qubit twist defect 710. The parity may be acquire through the measurement qubit of the circuit at the upper end.

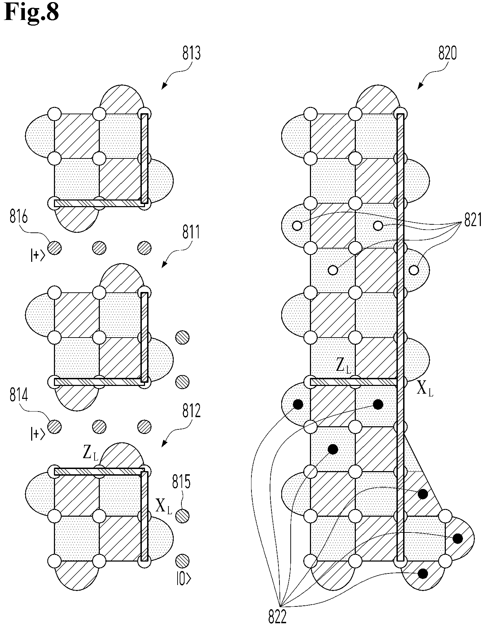

FIG. 8 is a diagram illustrating joint ZZ & ZY measurement processes according to an exemplary embodiment of the present disclosure.

Since the joint ZZ measurement and the joint ZY measurement are commutable operations, the joint ZZ measurement and the joint ZY measurement may be performed simultaneously.

The quantum computing device 100 may generate an integrated logical qubit 820 by turning on (activating) a stabilizer which is present between logical qubits when performing the joint ZZ & ZY measurement for three logical qubits 811, 812, and 813 which are in any state from the top. The quantum computing device 100 may perform the joint ZZ & ZY measurement in three logical qubits 811, 812, and 813 by using the integrated logical qubit 820.

The quantum computing device 100 multiplies all parities of a stabilizer 821 that determines the joint ZZ measurement result among newly operating stabilizers to acquire a result of the joint ZZ measurement. The stabilizer 821 that determines the joint ZZ measurement result may be predetermined.

The quantum computing device 100 multiplies all parities of a stabilizer 822 that determines a joint ZY measurement result among newly operating stabilizers to acquire a result of the joint ZY measurement. The stabilizer 822 that determines the joint ZY measurement result may be predetermined.

During a repeatedly performed process in order to complement the measurement error, a total of 1d cycle may be consumed for the joint ZY measurement.

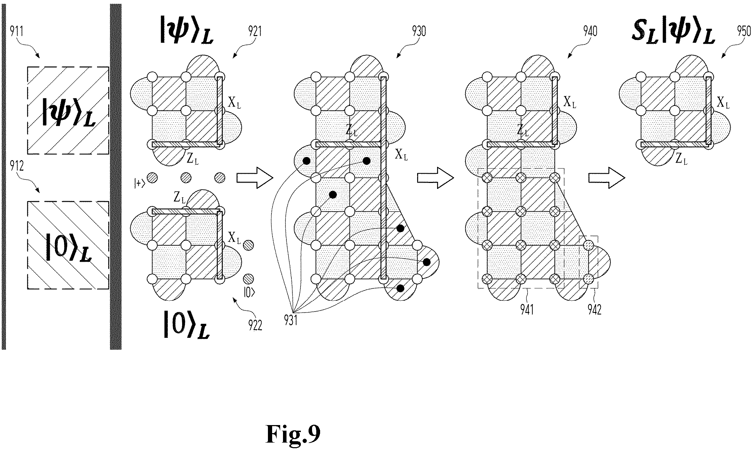

FIG. 9 is a diagram illustrating a logical S operation performing process according to an exemplary embodiment of the present disclosure.

Referring to FIG. 9, a data patch 911 may be in any state $|\psi\rangle_L$ which is to perform the logical S operation. A first ancilla patch 912 may be $|0\rangle_L$. Alternatively, the first ancilla patch 912 may be prepared as $|0\rangle_L$ (may be initialized).

The quantum computing device 100 may generate an integrated logical qubit 930 by turning on (activating) a stabilizer between the first logical qubit 921 corresponding to the data patch 911 and the second logical qubit 922 corresponding to the first ancilla patch 912.

The quantum computing device 100 may perform the joint ZY measurement in the first logical qubit 921 and the second logical qubit 922 by using the integrated logical qubit 930.

The quantum computing device 100 multiplies all parities of a stabilizer 931 that determines a joint ZY measurement result among newly operating stabilizers to acquire a result of the joint ZY measurement.

The quantum computing device 100 may measure a qubit which is present in a first region 941 as the Z basis and a qubit which is present in a second region 942 as the X basis in an integrated logical qubit 940. After measurement is completed, the second logical qubit 922 corresponding to the first ancilla patch 912 may be consumed during the operation process, and only a logical qubit 950 corresponding to an operation result may be present.

In the logical S operation performing process according to an exemplary embodiment of the present disclosure, a total of 1d cycle may be consumed.

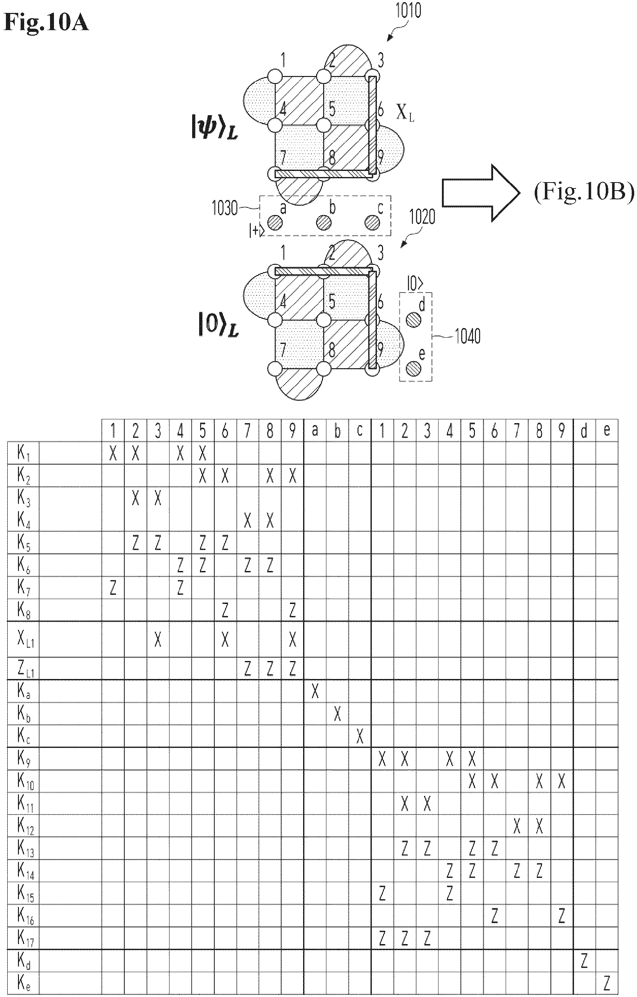

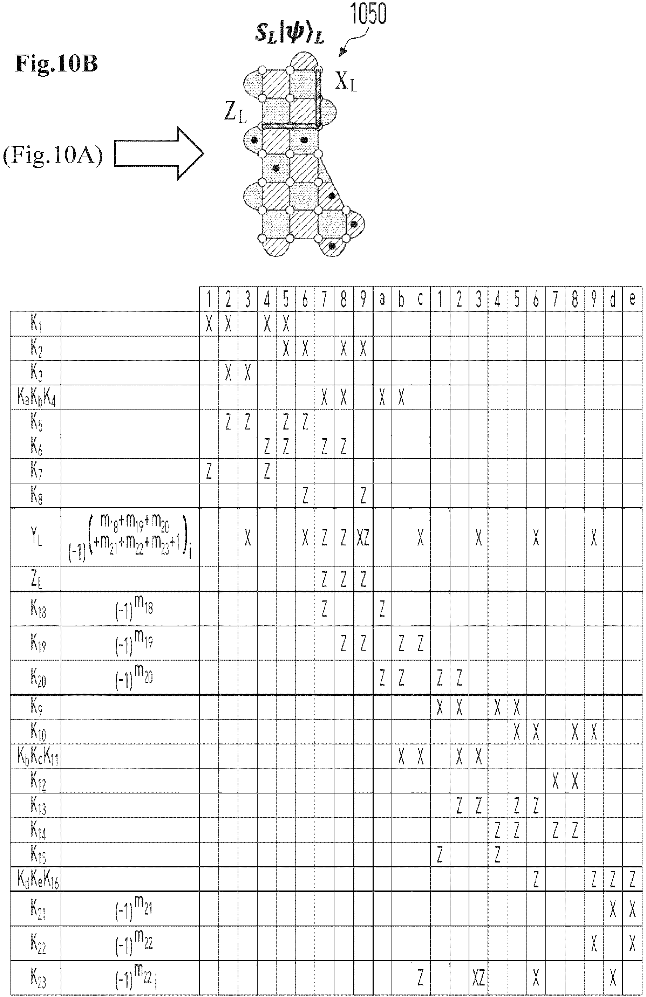

FIG. 10 is a diagram illustrating a change of a stabilizer upon performing a logical S operation according to an exemplary embodiment of the present disclosure.

Referring to FIG. 10, the quantum computing device 100 may initialize a first logical ancilla qubit 1030 to |+⟩ when there are a first logical qubit 1010 and a second logical qubit 1020 which are in any state. The quantum computing device 100 may initialize a second logical ancilla qubit 1040 to |0⟩.

The quantum computing device 100 may generate an integrated logical qubit 1050 by turning on (activating) a stabilizer between the first logical qubit 1010 and the second logical qubit 1020. The quantum computing device 100 may perform the joint ZY measurement in the first logical qubit 1010 and the second logical qubit 1020 by using the integrated logical qubit 1050.

The logical S operation is characterized in changing the X operation to Y and changing the Z operation to Z, and when the stabilizer illustrated in FIG. 10 is newly turned on, it may be confirmed that corresponding characteristics are shown.

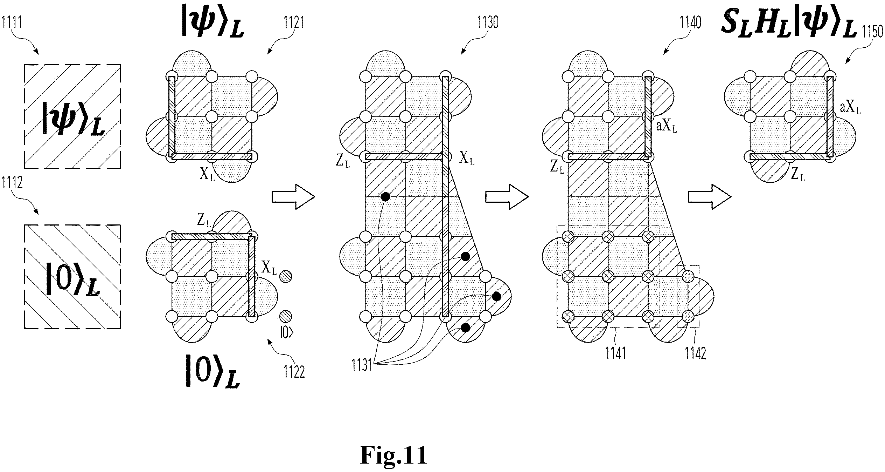

FIG. 11 is a diagram illustrating a logical SH operation performing process according to an exemplary embodiment of the present disclosure.

Referring to FIG. 11, a data patch 1111 may be in any state $|\psi\rangle_L$ which is to perform the logical SH operation. A first ancilla patch 1112 may be $|0\rangle_L$. Alternatively, the first ancilla patch 1112 may be prepared as $|0\rangle_L$ (may be initialized).

The quantum computing device 100 may generate an integrated logical qubit 1130 by turning on (activating) a stabilizer between a first logical qubit 1121 corresponding to the data patch 1111 and a second logical qubit 1122 corresponding to the first ancilla patch 1112.

The quantum computing device 100 may perform the joint XY measurement in the first logical qubit 1121 and the second logical qubit 1122 by using the integrated logical qubit 1130.

The quantum computing device 100 multiplies all parities of a stabilizer 1131 that determines a joint XY measurement result among newly operating stabilizers to acquire a result of the joint XY measurement.

The quantum computing device 100 may measure a qubit which is present in a first region 1141 as the Z basis and a qubit which is present in a second region 1142 as the X basis in an integrated logical qubit 1140. After measurement is completed, the second logical qubit 1122 corresponding to the first ancilla patch 1112 may be consumed during the operation process, and only a logical qubit 1150 corresponding to an operation result may be present.

In the logical SH operation performing process according to an exemplary embodiment of the present disclosure, a total of 1d cycle may be consumed.

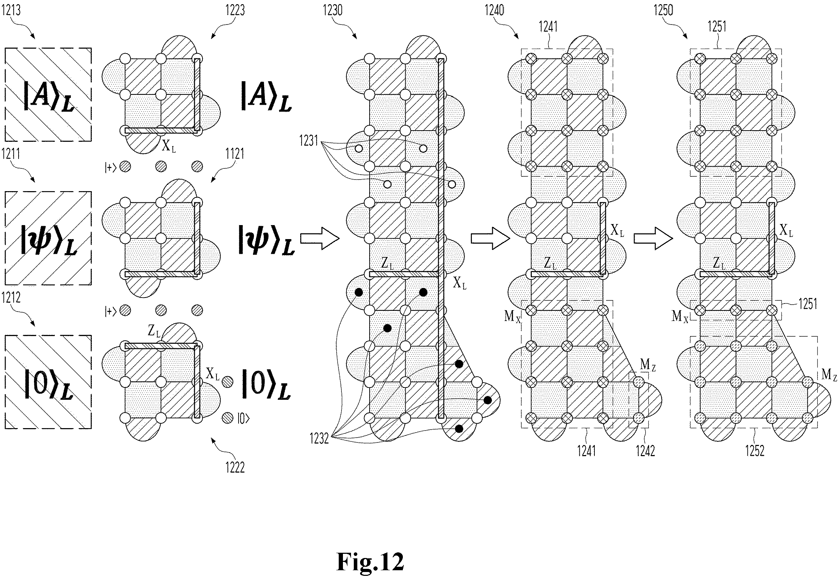

FIG. 12 is a diagram illustrating a logical T operation performing process according to an exemplary embodiment of the present disclosure.

In the quantum computing device 100, a data patch 1211 may be in any state $|\psi\rangle_L$ which is to perform the logical T operation. A first ancilla patch 1212 may be $|0\rangle_L$. Alternatively, the first ancilla patch 1212 may be prepared as $|0\rangle_L$ (may be initialized). A second ancilla patch 1213 may be prepared $|A\rangle_L$.

The quantum computing device 100 may generate an integrated logical qubit 1230 by turning on (activating) 'a stabilizer which is present between the data patch 1211 and the first ancilla patch 1212' and 'a stabilizer which is present between the data patch 1211 and the second ancilla patch 1213'. The quantum computing device 100 may perform the joint ZZ & ZY measurement in three logical qubits 1211, 1212, and 1213 by using the integrated logical qubit 1230.

The quantum computing device 100 multiplies all parities of a stabilizer 1231 that determines the joint ZZ measurement result among newly operating stabilizers to acquire a result of the joint ZZ measurement. The stabilizer 1231 that determines the joint ZZ measurement result may be predetermined.

The quantum computing device 100 multiplies all parities of a stabilizer 1232 that determines a joint ZY measurement result among newly operating stabilizers to acquire a result of the joint ZY measurement. The stabilizer 1232 that determines the joint ZY measurement result may be predetermined.

The quantum computing device 100 may measure the first ancilla patch 1212 which is $|0\rangle_L$ as the Z basis when the joint ZZ measurement result is +1. Accordingly, the quantum computing device 100 may measure a qubit which is present in a first region 1241 as the Z basis in an integrated logical qubit 1240 and a qubit which is present in a second region 1242 as the X basis in the integrated logical qubit 1240.

The quantum computing device 100 may measure the first ancilla patch 1212 which is $|0\rangle_L$ as the X basis when the joint ZZ measurement result is -1. Accordingly, the quantum computing device 100 may measure a qubit which is present in a first region 1251 as the Z basis in an integrated logical qubit 1250 in an integrated logical qubit 1250 and a qubit which is present in a second region 1252 as the X basis in the integrated logical qubit 1250.

In the logical T operation performing process according to an exemplary embodiment of the present disclosure, a total of 1d cycle may be consumed.

Hereinafter, a result of comparing the implementation method of the logical S operation and T operation proposed in the related art and the implementation method of the logical S operation and T operation according to an exemplary embodiment of the present disclosure will be described below.

Table 1 below is a table in which the logical S operation method proposed in the related art and the time cost, the space cost, and the space-time cost of the logical S operation according to an exemplary embodiment of the present disclosure are compared with each other.

[Table 1]

| Method | Distilled $|Y\rangle_L$ | Time cost | Space cost (Data+ancilla patches) | Space-time cost (per logical qubit) | Reference |
|---|---|---|---|---|---|
| Using logical Hadamard and CNOT | O | $14d$ | $2 \times 1d^2$ | $28d^3$ | Fowler, 2012 |
| $|Y\rangle_L$ and ZZ measurement | O | $1d$ | $2 \times 1d^2$ | $2d^3$ | Haah, 2021 |
| ZY measurement by using $|0\rangle_L$ and 5-qubit defect | X | $1d$ | $2 \times (2d^2 - 2d)$ | $4d^3 - 4d^2$ | Litinski, 2019 |
| ZY measurement by using $|0\rangle_L$ and 4-qubit defect | X | $1d$ | $2 \times (1d^2 + 2d)$ | $2d^3 + 4d^2$ | Proposed in present disclosure |

Referring to Table 1, a method (Fowler, A., G., Mariantoni, M. Martins, J. M. & Cleland, A. N. "Surface codes: Towards practical large-scale quantum computation." Physical Review A 86.3 (2012): 032324.) proposed by Fowler in 2012 as a case of performing the logical S by using the logical Hadamard and CNOT operations requires $|Y\rangle_L$ which is the magic state. Since a large cost is consumed for the logical Hadamard and CNOT operations, the time and space costs increase. Although not considered in the table, a separate cost is required even in a magic state distillation process of preparing $|Y\rangle_L$ which is the magic state.

In a logical S operation performing method (Haah, Jeongwan, and Matthew B., Hastings. "Measurement sequences for magic state distillation." Quantum 5 (2021):, 383.) introduced in a study by Haah in 2021, the joint ZZ measurement, and $|Y\rangle_L$ which is the magic state are used. The corresponding technique requires small time and space costs, but a cost required for preparing $|Y\rangle_L$ which is the magic state is excluded therefrom, so a separate cost is also required for the magic state distillation process.

A logical S operation performing method (Litinski, Daniel., "A game of surface codes:, Large-scale quantum computing with lattice surgery. ", Quantum 3 (2019):, 128.) presented in a study by Litinski in 2019 is a scheme that uses the joint ZY measurement in a logical qubit of two-patch wide by using the 5-qubit twist defect. The corresponding technique does not require $|Y\rangle_L$ which is the magic state, but uses the logical qubit of two-patch wide, so the space cost increases.

Table 2 below is a table in which the logical T operation method proposed in the related art and the time cost, the space cost, and the space-time cost of the logical T operation according to an exemplary embodiment of the present disclosure are compared with each other.

[Table 2]

| Method | Distilled $|Y\rangle_L$ | Time cost | Space cost (Data+ancilla patches) | Space-time cost (per logical qubit) | Reference |
|---|---|---|---|---|---|
| Using logical CNOT and S | O | $17d$ | $3 \times 1d^2$ | $51d^3$ | Zhou, 2000 |
| Using $|A\rangle_L$, and ZZ measurement and S | O | $2d$ | $3 \times 1d^2$ | $6d^3$ | Bravyi, 2016, Fowler, 2018 |
| ZZ & ZY measurement using $|A\rangle_L$ and $|0\rangle_L$, and 5-qubit defect | X | $1d$ | $2 \times (2d^2 - 2d) + 1d^2$ | $5d^3 - 4d^2$ | Litinski, 2019 |
| ZZ & ZY measurement using $|A\rangle_L$ and $|0\rangle_L$, and 5-qubit defect | X | $1d$ | $3 \times (1d^2 + 2d)$ | $3d^3 + 6d^2$ | Proposed in present disclosure |

Referring to Table 2, a logical T operation performing method (Zhou, Xinlan, Debbie W. Leung, and Isaac L. Chuang. "Methodology for quantum logic gate construction." Physical Review A 62.5 (2000):, 052316.) proposed in a study by Zhou in 2000 is a teleportation circuit using the logical CNOT and S operations. Since the corresponding technique requires the logical S operation, the large time and space costs are required.

In a study (Bravyi, Sergey, Graeme Smith, and John A. Smolin. "Trading classical and quantum computational resources." Physical Review X 6.2 (2016): 021043.) by Bravyi in 2016 and a study (Fowler, Austin G. and Craig Gidney. "Low overhead quantum computation using lattice surgery." arXiv preprint arXiv:1808.06709 (2018).) by Fowler in 2018, the logical T operation performing method is introduced by using $|A\rangle_L$ which is the magic state, and the joint ZZ measurement. In the corresponding technique, a smaller cost is used than the method using the logical CNOT, but the logical S operation is used, so a time cost of 2d is required.

A logical T operation performing method (Litinski, Daniel. "A game of surface codes:, Large-scale quantum computing with lattice surgery." Quantum 3 (2019): 128) presented in the study by Litinski in 2019 is a scheme that uses the joint ZZ & ZY measurement in the logical qubit of two-patch wide by using the 5-qubit twist defect. The corresponding technique does not require $|A\rangle_L$ which is the magic state, but uses the logical qubit of two-patch wide, so the space cost increases.

As described above with reference to FIGS. 1 to 12, since the quantum computing device 100 according to an exemplary embodiment of the present disclosure is capable of performing the logical S and T operations only with a logical qubit of one-patch wide, a smaller space cost may be required than the existing scheme requiring the logical qubit of two-patch wide.

Further, since the quantum computing device 100 according to an exemplary embodiment of the present disclosure may constitute a layout of the logical qubit by the logical qubit of one-patch wide, it may be suitable to place the logical qubit according to a layout such as checkerboard-type, row-type, etc.

The 5-qubit twist defect used in two-patch wide may take a longer time of the measurement circuit than the X and Z stabilizers in the related art. Accordingly, a longer time is required for 1 surface code cycle, and this increases a required time of an entire circuit. On the contrary, since the parity measurement circuit of the 4-qubit twist defect used in the quantum computing device 100 according to an exemplary embodiment of the present disclosure is enabled to be performed within the same time as the X and Z stabilizers in the related art, 1 surface code cycle may not be increased.

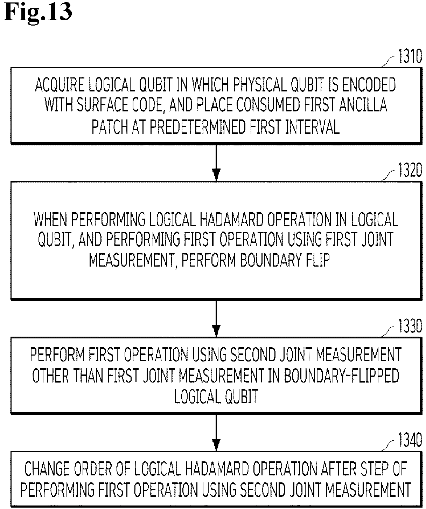

Meanwhile, FIG. 13 is a diagram illustrating a logical Hadamard operation implementation method utilizing boundary flip and transform of a subsequent measurement according to an exemplary embodiment of the present disclosure.

Steps illustrated in FIG. 13 are exemplary steps. Therefore, it will also be apparent to those skilled in the art that some of the steps of FIG. 13 may be omitted or there may be additional steps within a range without departing from a spirit scope of the present disclosure. Further, specific contents regarding the components (e.g., the quantum computing device 100, etc.) disclosed in FIG. 13 may be replaced with the contents described through FIGS. 1 to 12 above. The steps illustrated in FIG. 13 may be performed, for example, by the quantum computing device 100.

Referring to FIG. 13, the processor 110 of the quantum computing device 100 may acquire a logical qubit in which a physical qubit is encode with a surface code (1310).

When the processor 110 performs a logical Hadamard operation in a logical qubit, and performs a first operation using a first joint measurement, the processor 110 may perform a boundary flip (1320).

In an exemplary embodiment, the boundary flip may refer to replacing an X boundary included in the logical qubit with a Z boundary, and the Z boundary with an X boundary.

The X boundary may be a boundary constituted by an X stabilizer included in the logical qubit.

The Z boundary may be a boundary constituted by a Z stabilizer included in the logical qubit.

The processor 110 may perform a first operation by using a second joint measurement other than the first joint measurement in a boundary-inverted logical qubit (1330).

When a measurement of an operation subsequent to the logical Hadamard operation is the joint XX measurement, the processor 110 may transform the operation as in Equation 1 below.

[Equation 1]

$$(H \otimes I)^{\dagger}(X \otimes X)(H \otimes I) = Z \otimes X \rightarrow (X \otimes X)(H \otimes I) = (H \otimes I)(Z \otimes X)$$

When the measurement of an operation subsequent to the logical Hadamard operation is the joint ZZ measurement, the processor 110 may transform the operation as in Equation 2 below.

[Equation 2]

$$(H \otimes I)^{\dagger}(Z \otimes Z)(H \otimes I) = X \otimes Z \rightarrow (Z \otimes Z)(H \otimes I) = (H \otimes I)(X \otimes Z)$$

In Equations 1 and 2, an arrow may mean that a left formula of the arrow may be changed to a right formula of the arrow. $\otimes$ may represent a tensor product, and † may represent a conjugate-transpose. Referring to Equations 1 and 2, a left relationship of the arrow is established between a Hadamard operation H, and a Pauli operation (X, Z), and an Identity operation I, and when this is transformed as in the right side of the arrow, it can be seen that performing the X operation after the H operation is the same as performing the H operation after the Z operation.

In an exemplary embodiment, the processor 110 may perform the joint XZ measurement which is the second joint measurement other than the joint ZZ measurement which is the first joint measurement in the boundary-inverted logical qubit when the first operation is the logical CNOT.

In an exemplary embodiment, the processor 110 may perform the joint ZX measurement which is the second joint measurement other than the joint XX measurement which is the first joint measurement in the boundary-inverted logical qubit when the first operation is patch extension. The patch extension may mean that one patch which is in any $\psi$(psi) state performs the joint ZZ measurement with a patch which is in the + state, or performs the joint XX measurement with a patch which is in the 0 state. Since a merged patch is still in the $\psi$(psi) state, the same effect as increasing the patch may be just achieved.

In an exemplary embodiment, the processor 110 may perform the joint XY measurement which is the second joint measurement other than the joint ZY measurement which is the first joint measurement in the boundary-inverted logical qubit when the first operation is the logical S operation.

In an exemplary embodiment, the processor 110 may perform the joint ZX and XY measurement which is the second joint measurement other than the joint ZZ and ZY measurement which is the first joint measurement in the boundary-inverted logical qubit when the first operation is the logical T operation.

The processor 110 may change an order of the logical Hadamard operation after a step of performing the first operation by using the second joint measurement (1340).

In an exemplary embodiment, when there is another operation other than the measurement subsequent to the changed order of the logical Hadamard operation, the processor 110 may repeatedly perform the above steps 1320 and 1330. For example, when there is a second operation using a third joint measurement subsequent to the changed order of the logical Hadamard operation, the processor 110 may perform the boundary flip in the logical qubit in which the first operation is performed. The processor 110 may perform the second operation by using a fourth joint measurement other than the third joint measurement in a logical qubit in which the boundary flip and the first operation are performed. The processor 110 may change the order of the logical Hadamard operation after a step of performing the second operation by using the fourth joint measurement.

In an exemplary embodiment, when there is a single measurement subsequent to the changed order of the logical Hadamard operation, the processor 110 merges the logical Hadamard operation and the single measurement to change a basis which measuring the logical qubit in which the first operation is performed in the single measurement.

For example, when the basis measured in the single measurement is the X basis, the processor 110 merges the logical Hadamard operation and the single measurement to change the basis measured in the single measurement to the Z basis.

As another example, when the basis measured in the single measurement is the Z basis, the processor 110 merges the logical Hadamard operation and the single measurement to change the basis measured in the single measurement to the X basis.

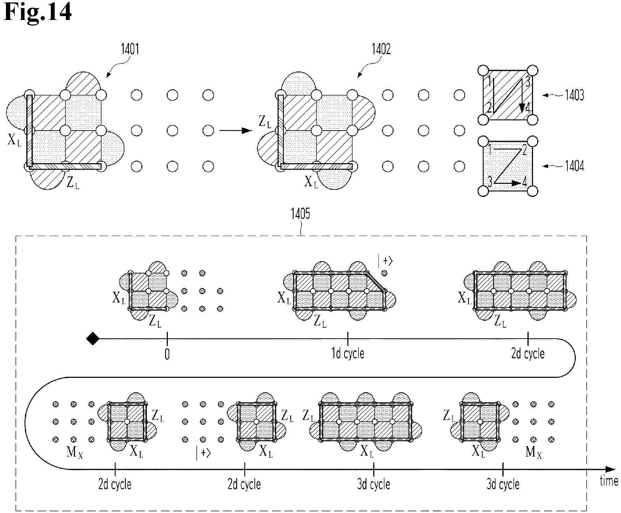

Hereinafter, a detailed description of the configuration, step, etc., described above with reference to FIG. 13 above will be made with reference to FIGS. 14 to 19.

FIG. 14 is a diagram illustrating a physical CNOT execution order according to the boundary flip in an exemplary embodiment of the present disclosure.

Referring to FIG. 14, in one logical qubit 1401 encoded with a surface code in which 'd = 3', all circles may mean one physical qubit. An arrow in an X stabilizer 1403 and a Z stabilizer 1404 may mean an order in which the physical CNOT operation is executed in the parity measurement circuit of the stabilizer. The X stabilizer 1403 may execute the CNOT from the top to the bottom, and the Z stabilizer 1404 may execute the CNOT from the left to the right. When the processor 110 performs the boundary flip, all stabilizers which are on a boundary are simultaneously changed when 3d cycle 1405 ends, so the boundary is changed as rotating at 90 degrees to acquire a boundary-inverted logical qubit 1402. Similarly, logical X and logical Z may also rotate at 90 degrees. The processor 110 may correct the measurement error by repeating the corresponding operation 3d times. In the operation process, the distance and a degree of freedom are maintained to be the same, so original information may not be damaged.

The processor 110 may correct the logical operation according to a parity measurement result of a newly turned-on stabilizer.

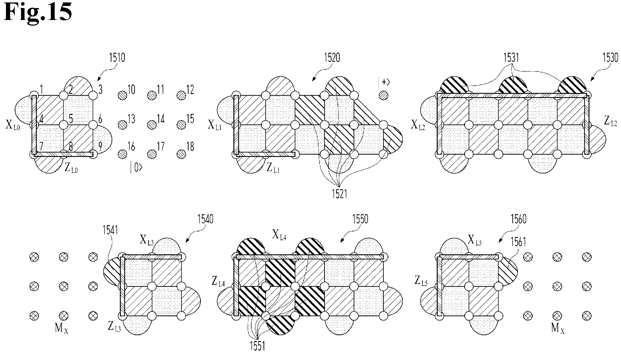

FIG. 15 is a diagram illustrating changes in logical X and Z due to boundary inversion in an exemplary embodiment of the present disclosure.

Referring to FIG. 15, $Z_L$ and $X_L$ may be logical operations. $K_i$ may be stabilizers. $m_i$ may be parity measurement result of $K_i$. For example, $m_i$ is parity measurement result of $K_i$, which may be either 0 or 1.

In an exemplary embodiment, a logical qubit 1510 represents a qubit that corresponds to a stabilizer, and logical X and Z before the boundary flip. In the logical qubit 1510, $X_{L_0}$ may be $X_1X_4X_7$. In the logical qubit 1510, $Z_{L_0}$ may be $Z_7Z_8Z_9$.

In an exemplary embodiment, even though the logical operation is multiplied by the stabilizer, the logical operation may be the same as the logical operation in the related art. Accordingly, in a logical qubit 1520, $X_{L_1}$ may be $X_{L_0}$. In a logical qubit 1520, $Z_{L_1}$ may be $Z_{L_0}$. $K_1$ may be $X_3X_6X_{10}X_{13}$.

In an exemplary embodiment, the X boundary of logical qubit 1530 may be extended beyond the existing X boundaries($X_{L_0}$, $X_{L_1}$) and corrected based on the parity measurement results of newly activated stabilizer.

In the logical qubit 1530, $X_{L_2}$ may be $(-1)^{m_2}X_1X_2X_3X_4X_7X_{10}X_{11}X_{12}$. $Z_{L_2}$ may be $(-1)^{m_6+m_7+m_8}Z_{12}Z_{15}Z_{18}$. $K_2$ may be $X_{11}X_{12}$. $K_3$ may be $X_{11}X_{14}X_{15}$. $K_4$ may be $X_{13}X_{14}X_{16}X_{17}$. $K_5$ may be $X_{15}X_{18}$. $K_6$ may be $Z_1Z_2$. $K_7$ may be $Z_3Z_{10}$. $K_8$ may be $Z_{11}Z_{12}$.

In the logical qubit 1540, $X_{L_3}$ may be $(-1)^{m_2+m_{10}+m_{11}+m_{12}}X_{10}X_{11}X_{12}$. $Z_{L_3}$ may be $(-1)^{m_6+m_7}Z_{10}Z_{13}Z_{16}$. $K_9$ may be $X_{10}X_{13}$. $K_{10}$ may be $X_3$. $K_{11}$ may be $X_6$. $K_{12}$ may be $X_9$.

In an exemplary embodiment, the X boundary of logical qubit 1550 may be extended beyond the existing X boundary($X_{L3}$) and corrected based on the parity measurement results of newly activated stabilizer.

In the logical qubit 1550, $X_{L_4}$ may be $(-1)^{m_2+m_{10}+m_{11}+m_{12}}X_1X_2X_3X_{10}X_{11}X_{12}$. $Z_{L_4}$ may be $(-1)^{m_6+m_7+m_{13}+m_{14}+m_{15}+m_{16}+m_{17}+m_{18}}Z_1Z_4Z_7$. $K_{13}$ may be $Z_1Z_2$. $K_{14}$ may be $Z_2Z_3Z_5Z_6$. $K_{15}$ may be $Z_3Z_{10}$. $K_{16}$ may be $Z_4Z_5Z_7Z_8$. $K_{17}$ may be $Z_8Z_9$. $K_{18}$ may be $Z_6Z_9Z_{13}Z_{16}$.

In the logical qubit 1560, $X_{L_5}$ may be $(1-)^{m_2+m_{10}+m_{11}+m_{12}+m_{20}+m_{21}+m_{22}}X_1X_2X_3$. $Z_{L_5}$ may be $(-1)^{m_6+m_7+m_{13}+m_{14}+m_{15}+m_{16}+m_{17}+m_{18}}Z_1Z_4Z_7$. $K_{20}$ may be $X_{10}$. $K_{21}$ may be $X_{11}$. $K_{22}$ may be $X_{12}$.

In an exemplary embodiment, specific stabilizers 1521, 1531, 1541, 1551, 1561 may indicate stabilizers that require correction because their values can randomly be 0 or 1.

In an exemplary embodiment, the processor 110 may correct logical operations based on the values of specific stabilizers 1521, 1531, 1541, 1551, 1561.

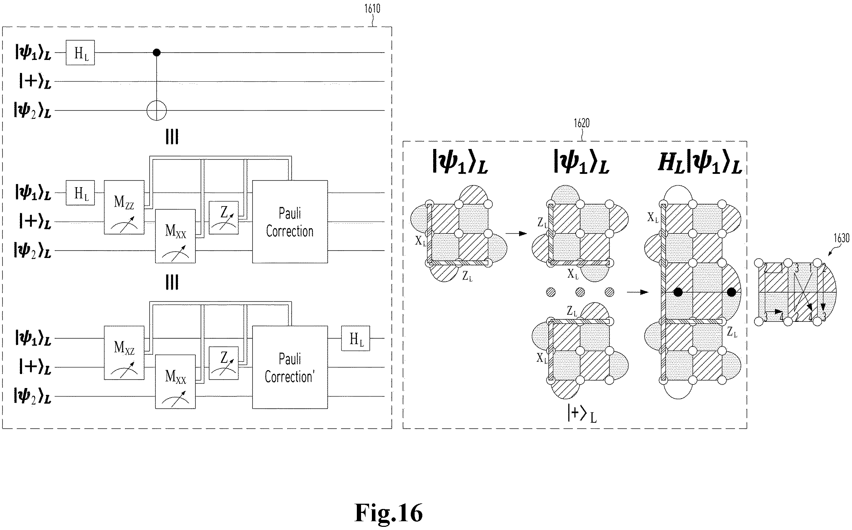

FIG. 16 is a diagram illustrating a process of performing the joint measurement performed when an operation subsequent to a logical Hadamard operation is a logical CNOT operation in an exemplary embodiment of the present disclosure.

Referring to FIG. 16, a quantum circuit 1610 may perform the logical Hadamard operation in any state $|\psi_1\rangle_L$, and then control the logical CNOT. The logical CNOT operation may be dissolved into the joint ZZ measurement and the joint XX measurement. The logical Hadamard operation which is to be performed in a control qubit of the logical CNOT may be moved after the logical CNOT while changing the joint ZZ measurement to the joint XZ measurement. The processor 110 may perform a process 1620 of performing the joint XZ measurement. For example, the processor 110 may perform the boundary flip in $|\psi_2\rangle_L$ in order to change a boundary facing $|\psi_1\rangle_L$ to the X boundary. The processor 110 may newly turn on a mixed stabilizer in which X and Z are mixed. The processor 110 multiplies a parity of the stabilizer marked with a black point to acquire a joint XZ measurement result. An execution order of the physical CNOT in the parity measurement circuit of the mixed stabilizer in which X and Z are mixed is represented as an arrow and a number in the qubit 1630. The corresponding order may be predetermined not to overlap with a physical CNOT execution order of surrounding stabilizers based on the orders specified in the X stabilizer 1403 and the Z stabilizer 1404 of FIG. 14. When the logical Hadamard is performed in a target qubit, the joint XZ measurement may be performed instead of the joint XX measurement. The process of performing the joint XZ measurement corresponds to the process described above, so the process is omitted.

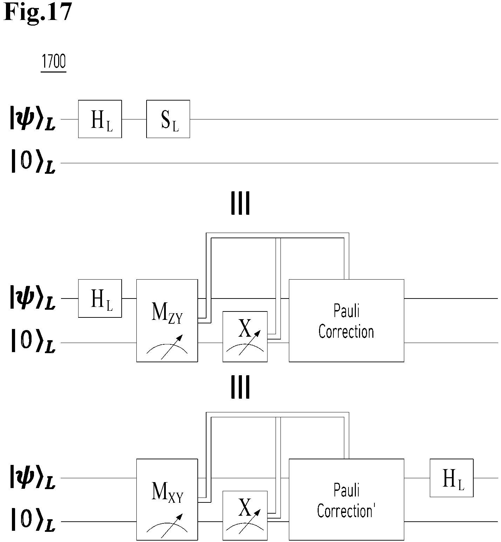

FIG. 17 is a diagram illustrating a process of performing the joint measurement performed when the operation subsequent to the logical Hadamard operation is a logical S operation in an exemplary embodiment of the present disclosure.

Referring to FIG. 17, the logical S operation may perform an ancilla patch prepared as $|0\rangle_L$, and the joint ZY measurement. As illustrated in a quantum circuit 1700, the processor 110 may move the logical Hadamard operation to be applied to any $|\psi\rangle_L$ to an operation after the logical S operation while changing the joint ZY measurement to the joint XY measurement.

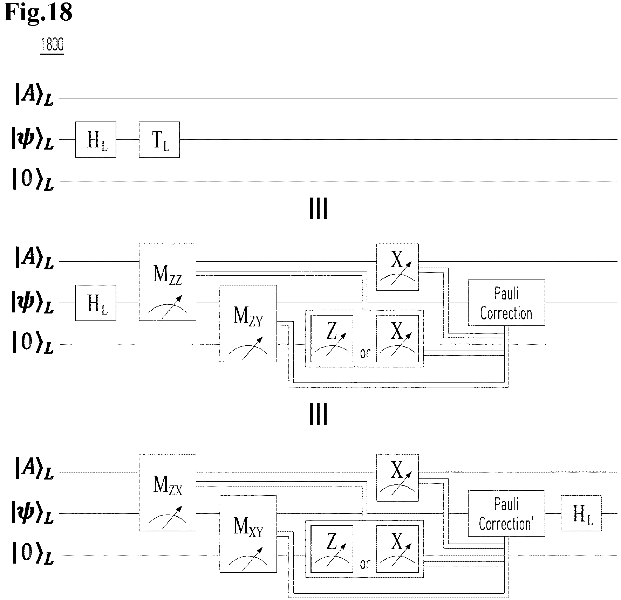

FIG. 18 is a diagram illustrating a process of performing the joint measurement performed when an operation subsequent to the logical Hadamard operation is a logical T operation in an exemplary embodiment of the present disclosure.

Referring to FIG. 18, the logical T operation may perform two ancilla patches prepared as $|A\rangle_L$ and $|0\rangle_L$ which are the magic state, and the joint ZZ and ZY measurement. As illustrated in a quantum circuit 1800, the processor 110 may move the logical Hadamard operation to be applied to any $|\psi\rangle_L$ to an operation after the logical T operation while changing the joint ZZ measurement to the joint ZY measurement, and changing the joint ZY measurement to the joint XY measurement. Since the joint ZX measurement and the joint XY measurement are commutable operations, the joint ZX measurement and the joint XY measurement may be performed simultaneously.

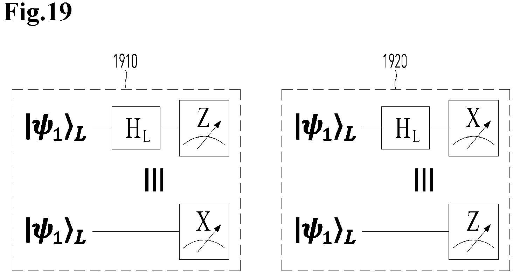

FIG. 19 is a diagram illustrating a measurement performed when the operation subsequent to the logical Hadamard operation is a single measurement in an exemplary embodiment of the present disclosure.

Referring to FIG. 19, as illustrated in a quantum circuit 1910, when the basis measured in the single measurement is the Z basis, the processor 110 merges the logical Hadamard operation and the single measurement to change the basis measured in the single measurement to the X basis.

In an exemplary embodiment, as illustrated in a quantum circuit 1920, when the basis measured in the single measurement is the X basis, the processor 110 merges the logical Hadamard operation and the single measurement to change the basis measured in the single measurement to the Z basis.

Hereinafter, a result of comparing the implementation method of the logical H operation proposed in the related art and the implementation method of the logical H operation according to an exemplary embodiment of the present disclosure will be described below.

Table 3 below is a table in which the logical H operation method proposed in the related art and whether to perform the physical H operation, the time cost, the space cost, and the space-time cost in the logical H operation according to an exemplary embodiment of the present disclosure are compared with each other.

[Table 3]

| Method | Performing physical Hadamard | Time cost | Space cost (per logical qubit) | Space-time cost (per logical qubit) | Reference |
|---|---|---|---|---|---|
| Merging with surrounding areas | O | $4d$ | $2d^2$ | $8d^3$ | Horman, 2012 |
| Quantum teleportation | X | $7d$ | $2d^2$ | $14d^3$ | Erhand, 2021 |
| Boundary flip and transformation | X | $3d$ | $2d^2 + d$ | $6d^3 + 3d^2$ | Proposed in present disclosure |

Referring to Table 3, in a method (Clare Horsman, Austin G Fowler, Simon Devitt, Rodney Van Meter, "Surface code quantum computing by lattice surgery" New Journal of Physics, Dec. 2012) proposed by Horsman in 2012 as a case of performing the physical Hadamard, rotation is performed by merging with a surround region. In this case, since a swap operation of the physical qubit is required, a clearance is required for each of all logical qubits (patches), so the number of physical qubits required per logical qubit becomes $2d^2$.

In a study (Alexander Erhard, Hendrik Poulsen Nautrup, Michael Meth, Lukas Postler, Roman Stricker, Martin Stadler, Vlad Negnevitsky, Martin Ringbauer, Philipp Schindler, Hans J. Briegel, Rainer Blatt, Nicolai Friis, Thomas Monz "Entangling logical qubits with lattice surgery" Nature, vol.589, pp.220-224, Jan., 2021) by Erhard in 2021, quantum teleportation is utilized in order to perform the Hadamard operation in one data patch. Accordingly, one logical qubit which is in 0 state is consumed, and data to which Hadamard is applied is stored in the logical qubit which is in the 0 state. When a qubit layout such as Checkerboard-type, row-type, etc., is considered, the Hadamard operation additionally uses the logical qubit, so the Hadamard operation becomes a consideration target upon routing. Besides, a time for returning data to an original location again is also added. Accordingly, the Hadamard operation influences the time cost in addition to the space cost.

As described above with reference to FIGS. 13 to 19, the quantum computing device 100 may perform the logical Hadamard by combining transformation of the subsequent measurement with the boundary flip. In the corresponding scheme, 1d cycle is consumed for the boundary flip, and an extra space need not be prepared around the logical qubit.

The quantum computing device 100 according to an exemplary embodiment of the present disclosure may be enabled to perform the H operation with smaller time and space costs than the method in the related art through the boundary flip and the subsequent measurement transformation.

The quantum computing device 100 according to an exemplary embodiment of the present disclosure may change the basis of the operation afterwards instead of performing the physical Hadamard in the process of performing the logical Hadamard.

The quantum computing device 100 according to an exemplary embodiment of the present disclosure may use a boundary flip technique to easily transform the boundary of the logical qubit according to the changed basis.

The quantum computing device 100 according to an exemplary embodiment of the present disclosure uses the boundary flip to transform the boundary of the logical qubit without additional qubit consumption within a shorter than the scheme in the related art.

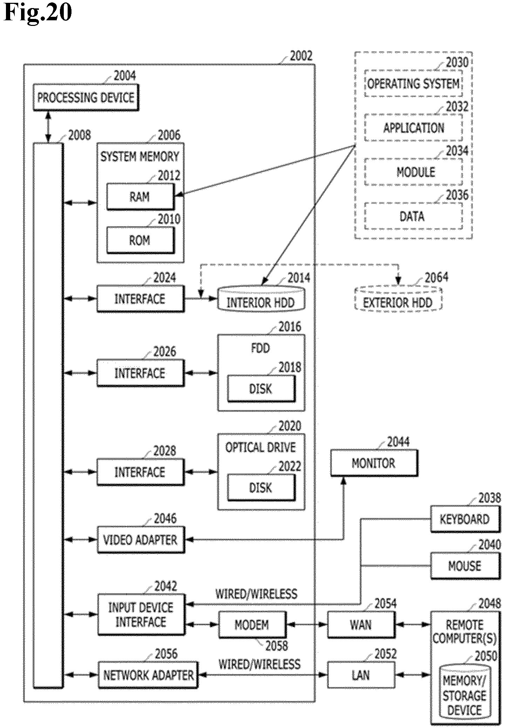

FIG. 20 is a simple and general schematic view of an exemplary computing environment in which exemplary embodiments of the present disclosure may be implemented.

The present disclosure has generally been described above in association with a computer executable instruction which may be executed on one or more computers, but it will be well appreciated by those skilled in the art that the present disclosure can be implemented through a combination with other program modules and/or a combination of hardware and software.

In general, the module in the present specification includes a routine, a procedure, a program, a component, a data structure, and the like that execute a specific task or implement a specific abstract data type. Further, it will be well appreciated by those skilled in the art that the method of the present disclosure can be implemented by other computer system configurations including a personal computer, a handheld computing device, microprocessor-based or programmable home appliances, and others (the respective devices may operate in connection with one or more associated devicesas well as a single-processor or multi-processor computer system, a mini computer, and a main frame computer.

The exemplary embodiments described in the present disclosure may also be implemented in a distributed computing environment in which predetermined tasks are performed by remote processing devices connected through a communication network. In the distributed computing environment, the program module may be positioned in both local and remote memory storage devices.

The computer generally includes various computer readable media. Media accessible by the computer may be computer readable media regardless of types thereof and the computer readable media include volatile and non-volatile media, transitory and non-transitory media, and mobile and non-mobile media. As a non-limiting example, the computer readable media may include both computer readable storage media and computer readable transmission media.

The computer readable storage media include volatile and non-volatile media, transitory and non-transitory media, and mobile and non-mobile media implemented by a predetermined method or technology for storing information such as a computer readable instruction, a data structure, a program module, or other data. The computer readable storage media include a RAM, a ROM, an EEPROM, a flash memory or other memory technologies, a CD-ROM, a digital video disk (DVD) or other optical disk storage devices, a magnetic cassette, a magnetic tape, a magnetic disk storage device or other magnetic storage devices or predetermined other media which may be accessed by the computer or may be used to store desired information, but are not limited thereto.

The computer readable transmission media generally implement the computer readable instruction, the data structure, the program module, or other data in a carrier wave or a modulated data signal such as other transport mechanism and include all information transfer media. The term "modulated data signal" means a signal acquired by setting or changing at least one of characteristics of the signal so as to encode information in the signal. As a non-limiting example, the computer readable transmission media include wired media such as a wired network or a direct-wired connection and wireless media such as acoustic, RF, infrared and other wireless media. A combination of anymedia among the aforementioned media is also included in a range of the computer readable transmission media.

An exemplary environment that implements various aspects of the present disclosure including a computer 2002 is shown and the computer 2002 includes a processing device 2004, a system memory 2006, and a system bus 2008. The system bus 2008 connects system components including the system memory 2006 (not limited thereto) to the processing device 2004. The processing device 2004 may be a predetermined processor among various commercial processors. A dual processor and other multi-processor architectures may also be used as the processing device 2004.

The system bus 2008 may be any one of several types of bus structures which may be additionally interconnected to a local bus using any one of a memory bus, a peripheral device bus, and various commercial bus architectures. The system memory 2006 includes a read only memory (ROM) 2010 and a random access memory (RAM) 2012. A basic input/output system (BIOS) is stored in the non-volatile memories 2010 including the ROM, the EPROM, the EEPROM, and the like and the BIOS includes a basic routine that assists in transmitting information among components in the computer 2002 at a time such as in-starting. The RAM 2012 may also include a high-speed RAM including a static RAM for caching data, and the like.

The computer 2002 also includes an internal hard disk drive (HDD) 2014 (for example, EIDE and SATA) - the internal hard disk drive (HDD) 2064 may also be configured for an external purpose in an appropriate chassis (not illustrated), a magnetic floppy disk drive (FDD) 2016 (for example, for reading from or writing in a mobile diskette 2018), and an optical disk drive 2020 (for example, for reading a CD-ROM disk 2022 or reading from or writing in other high-capacity optical media such as the DVD). The hard disk drive 2014 and 2064, the magnetic disk drive 2016, and the optical disk drive 2020 may be connected to the system bus 2008 by a hard disk drive interface 2024, a magnetic disk drive interface 2026, and an optical disk drive interface 2028, respectively. An interface 2024 for implementing an external drive includes, for example, at least one of a universal serial bus (USB) and an IEEE 1394 interface technology or both of them.

The drives and the computer readable media associated therewith provide non-volatile storage of the data, the data structure, the computer executable instruction, and others. In the case of the computer 2002, the drives and the media correspond to storing of predetermined data in an appropriate digital format. In the description of the computer readable storage media, the mobile optical media such as the HDD, the mobile magnetic disk, and the CD or the DVD are mentioned, but it will be well appreciated by those skilled in the art that other types of storage media readable by the computer such as a zip drive, a magnetic cassette, a flash memory card, a cartridge, and others may also be used in an exemplary operating environment and further, the predetermined media may include computer executable commands for executing the methods of the present disclosure.

Multiple program modules including an operating system 2030, one or more application programs 2032, other program module 2034, and program data 2036 may be stored in the drive and the RAM 2012. All or some of the operating system, the application, the module, and/or the data may also be cached by the RAM 2012. It will be well appreciated that the present disclosure may be implemented in operating systems which are commercially usable or a combination of the operating systems.

A user may input instructions and information in the computer 2002 through one or more wired/wireless input devices, for example, pointing devices such as a keyboard 2038 and a mouse 2040. Other input devices (not illustrated) may include a microphone?, an IR remote controller, a joystick, a game pad, a stylus pen, a touch screen, and others. These and other input devices are often connected to the processing device 2008 through an input device interface 2042 connected to the system bus 2004, but may be connected by other interfaces including a parallel port, an IEEE 1394 serial port, a game port, a USB port, an IR interface, and others.

A monitor 2044 or other types of display devices are also connected to the system bus 2008 through interfaces such as a video adapter 2046, and the like. In addition to the monitor 2044, the computer generally includes other peripheral output devices (not illustrated) such as a speaker, a printer, others.

The computer 2002 may operate in a networked environment by using a logical connection to one or more remote computers including remote computer(s) 2048 through wired and/or wireless communication. The remote computer(s) 2048 may be a workstation, a server computer, a router, a personal computer, a portable computer, a micro-processor based entertainment apparatus, a peer device, or other general network nodes and generally includes multiple components or all of the components described with respect to the computer 2002, but only a memory storage device 2050 is illustrated for brief description. The illustrated logical connection includes a wired/wireless connection to a local area network (LAN) 2052 and/or a larger network, for example, a wide area network (WAN) 2054. The LAN and WAN networking environments are general environments in offices and companies and facilitate an enterprise-wide computer network such as the Intranet, and all of them may be connected to a worldwide computer network, for example, the Internet.

When the computer 2002 is used in the LAN networking environment, the computer is connected to a local network 2052 through a wired and/or wireless communication network interface or an adapter 2056. The adapter 2056 may facilitate the wired or wireless communication to the LAN 2052 and the LAN 2052 also includes a wireless access point installed therein in order to communicate with the wireless adapter 2056. When the computer 2002 is used in the WAN networking environment, the computer 2002 may include a modem 2058 or may be connected to a communication server on the WAN 2054, or has other means that configure communication through the WAN 2054 such as the Internet, etc. The modem 2058 which may be an internal or external and wired or wireless device is connected to the system bus 2008 through the serial port interface 2042. In the networked environment, the program modules described with respect to the computer 2002 or some thereof may be stored in the remote memory/storage device 2050. It will be well known that an illustrated network connection is exemplary and other means configuring a communication link among computers may be used.

The computer 2002 performs an operation of communicating with predetermined wireless devices or entities which are disposed and operated by the wireless communication, for example, the printer, a scanner, a desktop and/or a portable computer, a portable data assistant (PDA), a communication satellite, predetermined equipment or place associated with a wireless detectable tag, and a telephone. This at least includes wireless fidelity (Wi-Fi) and Bluetooth wireless technology. Accordingly, communication may be a predefined structure like the network in the related art or just ad hoc communication between at least two devices.

The wireless fidelity (Wi-Fi) enables connection to the Internet, and the like without a wired cable. The Wi-Fi is a wireless technology such as the device, for example, a cellular phone which enables the computer to transmit and receive data indoors or outdoors, that is, anywhere in a communication range of a base station. The Wi-Fi network uses a wireless technology called IEEE 802.11 (a, b, g, and others) in order to provide safe, reliable, and high-speed wireless connection. The Wi-Fi may be used to connect the computers to each other or the Internet and the wired network (using IEEE 802.3 or Ethernet). The Wi-Fi network may operate, for example, at a data rate of 11 Mbps (802.11a) or 54 Mbps (802.11b) in unlicensed 2.4 and 5 GHz wireless bands or operate in a product including both bands (dual bands).

Those skilled in the art of the present disclosure will appreciate that various exemplary logic blocks, modules, processors, means, circuits, and algorithm steps described in association with the exemplary embodiments disclosed herein can be implemented by electronic hardware, various types of programs or design codes (designated as "software" herein for easy description), or a combination of all thereof. In order to clearly describe the intercompatibility of the hardware and the software, various exemplary components, blocks, modules, circuits, and steps have been generally described above in association with functions thereof. Whether the functions are implemented as the hardware or software depends on design restrictions given to a specific application and an entire system. Those skilled in the art of the present disclosure may implement functions described by various methods with respect to each specific application, but it should not be analyzed that the implementation determination departs from the scope of the present disclosure.

Various exemplary embodiments presented herein may be implemented as manufactured articles using a method, a device, or a standard programming and/or engineering technique. The term "manufactured article" includes a computer program, a carrier, or a medium which is accessible by a predetermined computer readable device. For example, a computer readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. The term "machine-readable media" includes a wireless channel and various other media that can store, possess, and/or transfer instruction(s) and/or data, but is not limited thereto.

It will be appreciated that a specific order or a hierarchical structure of steps in the presented processes is one example of exemplary accesses. It will be appreciated that the specific order or the hierarchical structure of the steps in the processes within the scope of the present disclosure may be rearranged based on design priorities. Appended method claims provide elements of various steps in a sample order, but the method claims are not limited to the presented specific order or hierarchical structure.

The description of the presented exemplary embodiments is provided so that those skilled in the art use or implement the present disclosure. Various modifications of the exemplary embodiments will be apparent to those skilled in the art and general principles defined herein can be applied to other embodiments without departing from the scope of the present disclosure. Therefore, the present disclosure is not limited to the exemplary embodiments presented herein, but should be analyzed within the widest range which is coherent with the principles and new features presented herein.

**Claims**

1. A method for a logical operation performed by a quantum computing device (100), the method comprising:

   placing a data patch (320) in which information is stored and computed, and a first ancilla patch (340) which is consumed during a logical operation at a predetermined first interval;
   placing a first logical ancilla qubit (350) between the data patch and the first ancilla patch;
   placing a second logical ancilla qubit (360) to have a predetermined distance from one side of the first ancilla patch; and
   performing a joint measurement utilizing the data patch and the first ancilla patch.

2. The method of claim 1, wherein the data patch (320) corresponds to a first logical qubit (310) in which a first physical qubit is encoded with a surface code, and
   the first ancilla patch (340) corresponds to a second logical qubit (330) in which a second physical qubit is encoded with the surface code.

3. The method of claim 2, wherein each of the first logical qubit (310) and the second logical qubit (330) includes

a data qubit (311) storing logical information,
an X stabilizer (312) formed at one side of the data qubit, and
a Z stabilizer (313) formed at one side of the data qubit.

4. The method of claim 3, wherein each of the X stabilizer (312) and the Z stabilizer (313) includes a measurement qubit.

5. The method of any of claims 1 to 4, wherein the performing of the joint measurement utilizing the data patch (320) and the first ancilla patch (340) includes
performing a logical S operation in the data patch by performing a joint ZY measurement in the data patch and the first ancilla patch.

6. The method of claim 5, wherein the performing of the logical S operation in the data patch (320) includes

initializing the first ancilla patch (340) to a 0 state,
initializing the first logical ancilla qubit (350) to a + state,
initializing the second logical ancilla qubit (360) to the 0 state, and
performing a joint ZY measurement in the data patch and the first ancilla patch by using a stabilizer between the data patch and the first ancilla patch.

7. The method of any of claims 1 to 6, wherein the performing of the joint measurement utilizing the data patch (320) and the first ancilla patch (340) includes
performing a logical SH operation in the data patch by performing a joint XY measurement in the data patch and the first ancilla patch.

8. The method of claim 7, wherein the performing of the logical SH operation in the data patch (320) includes

initializing the first ancilla patch (340) to the 0 state,
initializing the second logical ancilla qubit (360) to the 0 state, and
performing a joint XY measurement in the data patch and the first ancilla patch utilizing a stabilizer between the data patch and the first ancilla patch.

9. The method of any of claims 1 to 8, wherein the performing of the joint measurement utilizing the data patch (320) and the first ancilla patch (340) includes

placing a second ancilla patch at a location which is not duplicated with the first ancilla patch at a predetermined second interval from the data patch,
placing a third logical ancilla qubit between the data patch and the second ancilla patch, and
performing a logical T operation in the data patch by performing a joint ZZ and ZY measurement in the data patch, the first ancilla patch, and the second ancilla patch.

10. The method of claim 9, wherein the performing of the logical T operation in the data patch (320) includes

initializing the first ancilla patch (340) to the 0 state,
preparing the second ancilla patch in a predetermined magic state,
initializing the first logical ancilla qubit (350) and the third logical ancilla qubit to the + state,
initializing the second logical ancilla qubit (360) to the 0 state, and
performing the joint ZZ & ZY measurement to the data patch, the first ancilla patch, and the second ancilla patch by using a stabilizer between the data patch and the first ancilla patch and a stabilizer between the data patch and the second ancilla patch.

11. A non-transitory computer-readable medium including a computer program, wherein the computer program allows a quantum computing device (100) to perform a method for a logical operation, the method comprising:

placing a data patch (320) in which information is stored and computed, and a first ancilla patch (340) which is consumed during a logical operation at a predetermined first interval;
placing a first logical ancilla qubit (350) between the data patch and the first ancilla patch;
placing a second logical ancilla qubit (360) to have a predetermined distance from one side of the first ancilla patch; and

performing a joint measurement utilizing the data patch and the first ancilla patch.

12. A quantum computing device (100) for a logical operation, comprising:

a processor (110); and
a memory (130),
wherein the processor performs
an operation of placing a data patch (320) in which information is stored and computed, and a first ancilla patch (340) which is consumed during a logical operation at a predetermined first interval,
an operation of placing a first logical ancilla qubit (350) between the data patch and the first ancilla patch,
an operation of placing a second logical ancilla qubit (360) to have a predetermined distance from one side of the first ancilla patch, and
an operation of performing a joint measurement utilizing the data patch and the first ancilla patch.

# Fig.1

```
                                    100
        ┌─────────────────────────────┐
        │   ┌─────────────────┐        │
        │   │    PROCESSOR    │~110    │
        │   └─────────────────┘        │
        │   ┌─────────────────┐        │
        │   │     MEMORY      │~130    │
        │   └─────────────────┘        │
        │   ┌─────────────────┐        │
        │   │  NETWORK UNIT   │~150    │
        │   └─────────────────┘        │
        └─────────────────────────────┘
```

# Fig.2

210
PLACE DATA PATCH IN WHICH INFORMATION IS STORED AND COMPUTED, AND FIRST ANCILLA PATCH WHICH IS CONSUMED DURING LOGICAL OPERATION AT PREDETERMINED FIRST INTERVAL

220
PLACE FIRST LOGICAL ANCILLA QUBIT BETWEEN DATA PATCH AND FIRST ANCILLA PATCH

230
PLACE SECOND LOGICAL ANCILLA QUBIT TO HAVE PREDETERMINED DISTANCE FROM ONE SIDE OF FIRST ANCILLA PATCH

240
PERFORM JOINT MEASUREMENT UTILIZING DATA PATCH AND FIRST ANCILLA PATCH

# Fig.3

Fig.4

Fig.5

Fig.6

**Fig.7**

**Fig.8**

**Fig.9**

## Fig.10A

1010

$|\psi\rangle_L$   X$_L$

1030 — a b c   1020
$|+\rangle$

$|0\rangle_L$   $|0\rangle$ d e — 1040

(Fig.10B)

| | 1 | 2 | 3 | 4 | 5 | 6 | 7 | 8 | 9 | a | b | c | 1 | 2 | 3 | 4 | 5 | 6 | 7 | 8 | 9 | d | e |
|---|---|---|---|---|---|---|---|---|---|---|---|---|---|---|---|---|---|---|---|---|---|---|---|
| $K_1$ | X | X | | X | X | | | | | | | | | | | | | | | | | | |
| $K_2$ | | | | | X | X | | X | X | | | | | | | | | | | | | | |
| $K_3$ | | X | X | | | | | | | | | | | | | | | | | | | | |
| $K_4$ | | | | | | | X | X | | | | | | | | | | | | | | | |
| $K_5$ | | Z | Z | | Z | Z | | | | | | | | | | | | | | | | | |
| $K_6$ | | | | Z | Z | | Z | Z | | | | | | | | | | | | | | | |
| $K_7$ | Z | | | Z | | | | | | | | | | | | | | | | | | | |
| $K_8$ | | | | | | Z | | | Z | | | | | | | | | | | | | | |
| $X_{L1}$ | | X | | | X | | | X | | | | | | | | | | | | | | | |
| $Z_{L1}$ | | | | | | | Z | Z | Z | | | | | | | | | | | | | | |
| $K_a$ | | | | | | | | | | X | | | | | | | | | | | | | |
| $K_b$ | | | | | | | | | | | X | | | | | | | | | | | | |
| $K_c$ | | | | | | | | | | | | X | | | | | | | | | | | |
| $K_9$ | | | | | | | | | | | | | X | X | | X | X | | | | | | |
| $K_{10}$ | | | | | | | | | | | | | | | | | X | X | | X | X | | |
| $K_{11}$ | | | | | | | | | | | | | | X | X | | | | | | | | |
| $K_{12}$ | | | | | | | | | | | | | | | | | | | X | X | | | |
| $K_{13}$ | | | | | | | | | | | | | | Z | Z | | Z | Z | | | | | |
| $K_{14}$ | | | | | | | | | | | | | | | | Z | Z | | Z | Z | | | |
| $K_{15}$ | | | | | | | | | | | | | Z | | | Z | | | | | | | |
| $K_{16}$ | | | | | | | | | | | | | | | | | | Z | | | Z | | |
| $K_{17}$ | | | | | | | | | | | | | Z | Z | Z | | | | | | | | |
| $K_d$ | | | | | | | | | | | | | | | | | | | | | | Z | |
| $K_e$ | | | | | | | | | | | | | | | | | | | | | | | Z |

**Fig.10B**

(Fig.10A) ⟹

$$S_L|\psi\rangle_L \quad 1050$$

| | | 1 | 2 | 3 | 4 | 5 | 6 | 7 | 8 | 9 | a | b | c | 1 | 2 | 3 | 4 | 5 | 6 | 7 | 8 | 9 | d | e |
|---|---|---|---|---|---|---|---|---|---|---|---|---|---|---|---|---|---|---|---|---|---|---|---|---|
| $K_1$ | | X | X | | X | X | | | | | | | | | | | | | | | | | | |
| $K_2$ | | | | | | X | X | | X | X | | | | | | | | | | | | | | |
| $K_3$ | | | | X | X | | | | | | | | | | | | | | | | | | | |
| $K_a K_b K_4$ | | | | | | | | X | X | | X | X | | | | | | | | | | | | |
| $K_5$ | | | Z | Z | | Z | Z | | | | | | | | | | | | | | | | | |
| $K_6$ | | | | | Z | Z | | Z | Z | | | | | | | | | | | | | | | |
| $K_7$ | | Z | | | Z | | | | | | | | | | | | | | | | | | | |
| $K_8$ | | | | | | | | Z | | Z | | | | | | | | | | | | | | |
| $Y_L$ | $(-1)^{\left(\substack{m_{18}+m_{19}+m_{20}\\+m_{21}+m_{22}+m_{23}+1}\right)}i$ | | | X | | | X | Z | Z | XZ | | X | | | X | | | X | | | | X | | |
| $Z_L$ | | | | | | | | Z | Z | Z | | | | | | | | | | | | | | |
| $K_{18}$ | $(-1)^{m_{18}}$ | | | | | | | Z | | | Z | | | | | | | | | | | | | |
| $K_{19}$ | $(-1)^{m_{19}}$ | | | | | | | | Z | Z | Z | Z | | | | | | | | | | | | |
| $K_{20}$ | $(-1)^{m_{20}}$ | | | | | | | | | | Z | Z | | Z | Z | | | | | | | | | |
| $K_9$ | | | | | | | | | | | | | | X | X | | X | X | | | | | | |
| $K_{10}$ | | | | | | | | | | | | | | | | | | X | X | | X | X | | |
| $K_b K_c K_{11}$ | | | | | | | | | | | | X | X | X | X | | | | | | | | | |
| $K_{12}$ | | | | | | | | | | | | | | | | | | | X | X | | | | |
| $K_{13}$ | | | | | | | | | | | | | | | | Z | Z | | Z | Z | | | | |
| $K_{14}$ | | | | | | | | | | | | | | | | | Z | Z | | Z | Z | | | |
| $K_{15}$ | | | | | | | | | | | | | X | | | Z | | | | | | | | |
| $K_d K_e K_{16}$ | | | | | | | | | | | | | | | | | | | Z | | | Z | Z | Z |
| $K_{21}$ | $(-1)^{m_{21}}$ | | | | | | | | | | | | | | | | | | | | | | X | X |
| $K_{22}$ | $(-1)^{m_{22}}$ | | | | | | | | | | | | | | | | | | | | | X | | X |
| $K_{23}$ | $(-1)^{m_{22}}i$ | | | | | | | | | | | Z | | | XZ | | | X | | | | | X | |

Fig.11

Fig.12

**Fig.13**

```
                                                          ⌐1310
┌──────────────────────────────────────────────────────────┐
│        ACQUIRE LOGICAL QUBIT IN WHICH PHYSICAL QUBIT IS ENCODED        │
│        WITH SURFACE CODE, AND PLACE CONSUMED FIRST ANCILLA        │
│              PATCH AT PREDETERMINED FIRST INTERVAL              │
└──────────────────────────────────────────────────────────┘
                            │
                            ▼                    ⌐1320
┌──────────────────────────────────────────────────────────┐
│         WHEN PERFORMING LOGICAL HADAMARD OPERATION IN LOGICAL         │
│         QUBIT, AND PERFORMING FIRST OPERATION USING FIRST JOINT         │
│               MEASUREMENT, PERFORM BOUNDARY FLIP               │
└──────────────────────────────────────────────────────────┘
                            │
                            ▼                    ⌐1330
┌──────────────────────────────────────────────────────────┐
│       PERFORM FIRST OPERATION USING SECOND JOINT MEASUREMENT       │
│      OTHER THAN FIRST JOINT MEASUREMENT IN BOUNDARY-FLIPPED      │
│                        LOGICAL QUBIT                        │
└──────────────────────────────────────────────────────────┘
                            │
                            ▼                    ⌐1340
┌──────────────────────────────────────────────────────────┐
│      CHANGE ORDER OF LOGICAL HADAMARD OPERATION AFTER STEP OF      │
│     PERFORMING FIRST OPERATION USING SECOND JOINT MEASUREMENT     │
└──────────────────────────────────────────────────────────┘
```

**Fig.14**

**Fig.15**

Fig.16

**Fig.17**

1700

|ψ⟩$_L$ ─ H$_L$ ─ S$_L$ ─────────────────

|0⟩$_L$ ────────────────────────

|||

|ψ⟩$_L$ ─ H$_L$ ─ M$_{ZY}$ ─── X ─── Pauli Correction ───

|0⟩$_L$ ────── ───────────────

|||

|ψ⟩$_L$ ─── M$_{XY}$ ─── X ─── Pauli Correction' ─── H$_L$ ─

|0⟩$_L$ ────── ───────────────

**Fig.18**

<u>1800</u>

**Fig.19**

## Fig.20

**EUROPEAN SEARCH REPORT**

Application Number

EP 24 20 9368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE JONGHYUN ET AL: "Lattice surgery-based Surface Code architecture using remote logical CNOT operation", QUANTUM INFORMATION PROCESSING, SPRINGER US, NEW YORK, vol. 21, no. 6, 14 June 2022 (2022-06-14), XP037880655, DOI: 10.1007/S11128-022-03556-Z [retrieved on 2022-06-14] * the whole document * | 1-12 | INV. G06N10/70 |
| A | DANIEL LITINSKI ET AL: "Lattice Surgery with a Twist: Simplifying Clifford Gates of Surface Codes", ARXIV.ORG, CORNELL UNIVERSITY LIBRARY, 201 OLIN LIBRARY CORNELL UNIVERSITY ITHACA, NY 14853, 7 September 2017 (2017-09-07), XP081312888, DOI: 10.22331/Q-2018-05-04-62 * Abstract, 1. Introduction, 2. Edge tracking, 3. Lattice surgery with a twist * | 1-12 | |
| A | DANIEL LITINSKI: "A Game of Surface Codes: Large-Scale Quantum Computing with Lattice Surgery", ARXIV.ORG, CORNELL UNIVERSITY LIBRARY, 201 OLIN LIBRARY CORNELL UNIVERSITY ITHACA, NY 14853, 8 August 2018 (2018-08-08), XP081255132, * page 1 - page 20 * | 1-12 | |

TECHNICAL FIELDS SEARCHED (IPC)

G06N

-/--

The present search report has been drawn up for all claims

| Place of search | Date of completion of the search | Examiner |
|---|---|---|
| The Hague | 13 March 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAVASANI ALI ET AL: "Low overhead Clifford gates from joint measurements in surface, color, and hyperbolic codes", PHYSICAL REVIEW A, vol. 98, no. 5, 15 November 2018 (2018-11-15), pages 1-25, XP093251964, ISSN: 2469-9926, DOI: 10.1103/PhysRevA.98.052319 * Abstract, I. Introduction, III. Measurement-based protocols for clifford gates * | 1-12 | |
| X,P | KANG YUJIN ET AL: "Fault-tolerant quantum computation using low-cost joint measurements", QUANTUM INFORMATION PROCESSING, vol. 23, no. 5, 14 May 2024 (2024-05-14), XP093251787, Ne ISSN: 1573-1332, DOI: 10.1007/s11128-024-04389-8 * the whole document * | 1-12 | |

TECHNICAL FIELDS
SEARCHED (IPC)

The present search report has been drawn up for all claims

| Place of search | Date of completion of the search | Examiner |
|---|---|---|
| The Hague | 13 March 2025 | Moro Pérez, Gonzalo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230147985

**Non-patent literature cited in the description**

- **HORSMAN, C.** ; **FOWLER, A.G.** ; **DEVITT, S** ; **VAN METER, R.** Surface code quantum computing by lattice surgery.. *New Journal of Physics*, 2012, vol. 14 (12), 123011
- **HORSMAN, C.** ; **FOWLER, A.G** ; **DEVITT** ; **S. VAN METER, R**. Surface code quantum computing by lattice surgery.. *New Journal of Physics*, 2012, vol. 14 (12), 123011
- **LITINSKI, DANIEL** ; **FELIX VON OPPEN**. Lattice surgery with a twist:, simplifying clifford gates of surface codes.. *Quantum*, 2018, vol. 2, 62
- **LITINSKI** ; **DANIEL** ; **FELIX VON OPPEN**. Lattice surgery with a twist: simplifying clifford gates of surface codes.. *Quantum*, 2018, vol. 2, 62
- **FOWLER, A., G** ; **MARIANTONI, M.** ; **MARTINIS, J. M.** ; **CLELAND, A. N**. Surface codes: Towards practical large-scale quantum computation. *Physical Review A*, 2012, vol. 86 (3), 032324
- **HAAH** ; **JEONGWAN** ; **MATTHEW B., HASTINGS**. Measurement sequences for magic state distillation. *Quantum*, 2021, vol. 5, 383
- **LITINSKI, DANIEL**. A game of surface codes:, Large-scale quantum computing with lattice surgery. *Quantum*, 2019, vol. 3, 128

- **ZHOU, XINLAN** ; **DEBBIE W. LEUNG** ; **ISAAC L. CHUANG**. Methodology for quantum logic gate construction. *Physical Review A*, 2000, vol. 62 (5), 052316
- **BRAVYI, SERGEY** ; **GRAEME SMITH** ; **JOHN A. SMOLIN**. Trading classical and quantum computational resources. *Physical Review X*, 2016, vol. 6 (2), 021043
- **FOWLER, AUSTIN G.** ; **CRAIG GIDNEY**. Low overhead quantum computation using lattice surgery.. *arXiv preprint arXiv:1808.06709*, 2018
- **LITINSKI, DANIEL.** A game of surface codes:, Large-scale quantum computing with lattice surgery. *Quantum*, 2019, vol. 3, 128
- **CLARE HORSMAN** ; **AUSTIN G FOWLER** ; **SIMON DEVITT** ; **RODNEY VAN METER**. Surface code quantum computing by lattice surgery. *New Journal of Physics*, December 2012
- **ALEXANDER ERHARD** ; **HENDRIK POULSEN NAUTRUP** ; **MICHAEL METH** ; **LUKAS POSTLER** ; **ROMAN STRICKER** ; **MARTIN STADLER** ; **VLAD NEGNEVITSKY** ; **MARTIN RINGBAUER** ; **PHILIPP SCHINDLER** ; **HANS J. BRIEGEL**. Entangling logical qubits with lattice surgery. *Nature*, January 2021, vol. 589, 220-224